# EUROPÄISCHE PATENTSCHRIFT

(11) **EP 3 216 173 B1**
(45) Veröffentlichungstag und Bekanntmachung des Hinweises auf die Patenterteilung: **27.11.2019**
(21) Anmeldenummer: 15790861.7
(22) Anmeldetag: 22.10.2015
(51) Int. Cl.: H04L 12/40, H04L 1/00

(54) **ANORDNUNG UND VERFAHREN ZUR OPTIMIERUNG DER ÜBERTRAGUNG VON DIGITALEN DATEN IN ZWEIDRAHT-KOMMUNIKATIONS-NETZWERKEN**
ARRANGEMENT AND METHOD FOR OPTIMIZING THE TRANSMISSION OF DIGITAL DATA IN TWO-WIRE COMMUNICATION NETWORKS
SYSTÈME ET PROCÉDÉ POUR OPTIMISER LA TRANSMISSION DE DONNÉES NUMÉRIQUES DANS DES RÉSEAUX DE COMMUNICATION BIFILAIRES

(30) Priorität: 06.11.2014 DE 102014222661
(43) Veröffentlichungstag der Anmeldung: 13.09.2017
(73) Patentinhaber: Siemens Schweiz AG, 8047 Zürich (CH)
(72) Erfinder: BLATTMANN, Bernhard, CH-8049 Zürich (CH); KÜNG, Roland, CH-8633 Wolfhausen (CH); CAMENZIND, Oskar, 6422 Steinen (CH); EGGERSCHWILER, Jürg, CH-6370 Stans (CH)
(74) Vertreter: Maier, Daniel Oliver
(86) Internationale Anmeldenummer: PCT/EP2015/074429
(87) Internationale Veröffentlichungsnummer: WO 2016/071115

(56) Entgegenhaltungen:
- EP-A1- 2 372 564
- GB-A- 2 323 756
- US-A1- 2005 264 316
- US-A1- 2010 030 934

## Beschreibung

Die Erfindung betrifft ein Kommunikations-Netzwerk mit zwei oder mehr Netzwerk-Knoten, einen Netzwerk-Knoten in einem Kommunikations-Netzwerk mit mindestens zwei Netzwerk-Knoten und Zweidrahtverbindungen und ein Verfahren zur Optimierung der Übertragung von digitalen Daten in einem Zweidraht-Kommunikations-Netzwerk mit zwei oder mehr Netzwerk-Knoten.

Kommunikations-Netzwerke mit Zweidrahtverbindungen (Twisted-Pair-Kabel) sind weit verbreitet und werden u.a. auch in der Gebäudeautomatisierung eingesetzt, z.B. zur Verbindung von Aktoren und Sensoren in einem Gebäude. Beim standardisierten Bussystem KNX Twisted Pair (KNX TP) z.B. werden über eine Busleitung die Busteilnehmer mit Daten und auch mit der erforderlichen Betriebsspannung versorgt. Kommunikations-Netzwerke mit Zweidrahtverbindungen werden z.B. auf Feldebene in Automations-, Steuer- und Regel-, Auslese-, Mess- oder Bedien- und Informationssystemen eingesetzt.

In verschiedenen Anwendungsgebieten werden auf der Feldebene kostengünstige Kommunikations-Netzwerke (Feldbusse) mit komplexen Baumstrukturen und grosser Ausdehnung benötigt, an welchen viele Netzwerk-Knoten (z.B. Feldgeräte) angeschlossen werden können. Für die Verkabelung werden üblicherweise einfache kostengünstige Zweidrahtleitungen verwendet, welche an den Abzweigungen keine aktiven Komponenten erfordern. Der Frequenzgang solcher Zweidrahtleitungen zeigt eine deutliche Zunahme der Dämpfung in Abhängigkeit der Leitungslängen und der Frequenz. Durch die Dämpfung erfolgt eine Minderung des Signalpegels und damit der Übertragungsqualität im Kommunikations-Netzwerk. Deshalb können bekannte Feldbusse (z.B. KNX TP (Twisted-Pair)) nur mit geringen Datenraten (typisch 10kBit/s bei einer Netzwerk-Ausdehnung im Bereich von 1000m) betrieben werden.

Ein manuelles Setzen von Abschluss-Impedanzen zur Reduzierung der Dämpfung und Reflexionen für die Netzwerk-Knoten erfordert einen hohen Planungs- bzw. Inbetriebnahmeaufwand und ist fehleranfällig.

Die britische Patentanmeldung GB2323756A offenbart eine Anordnung zur Kopplung von integrierten Schaltkreiskomponenten innerhalb eines Kommunikationssystems eines integrierten Schaltkreises, wobei Dämpfungs-Impedanzen einsetzbar sind, um Verzerrungen und Überschwingungen im Kommunikationssystem zu reduzieren. GB2323756A offenbart eine dedizierte Verwendung der Anordnung in integrierten Schaltkreisen (IC's).

Die amerikanische Patentanmeldung US2010/0030934A1 offenbart ein Speichersystem, das eine Anzahl von integrierten Schaltkreisen (integrated circuit chips) umfasst, die über einen Bus gekoppelt sind, wobei jeder der integrierten Schaltkreise einen Ein/Ausgabeknoten aufweist, jeweils mit einem programmierbaren Abschlusswiderstand.

Die europäische Patentanmeldung EP2372564A1 offenbart eine Verbindungsvorrichtung an einen EIB- oder KNX-TP-Bus von Eingangs-/Ausgangsmodulen mit einer Anpassungsstufe für eine dynamische Impedanz.

Die amerikanische Patentanmeldung US2005/0264316A1 offenbart ein Bussystem mit einer variablen Busabschlussimpedanz, die mit dem Bus gekoppelt ist, wobei die Impedanz ansprechend auf eine Frequenz, die an eine mit dem Bus gekoppelte Steuerung geliefert wird, erhöht oder verringert wird.

Aus der japanischen Patentanmeldung JP2006074431A ist ein Verfahren zur Regulierung von Abschluss-Schaltungen, z.B. Impedanzen, in einem Netzwerk bekannt, welches aber eine aufwändige Transceiver Technologie zum Senden bzw. Empfangen benötigt.

Es ist daher die Aufgabe der vorliegenden Erfindung kostengünstige Anordnungen und Verfahren zur Optimierung der Übertragung von digitalen Daten in Zweidraht-Kommunikations-Netzwerken bereitzustellen.

Die Aufgabe wird gelöst durch ein Kommunikations-Netzwerk mit zwei oder mehr Netzwerk-Knoten, wobei ein Netzwerk-Knoten umfasst:
- eine Empfangsvorrichtung, geeignet zum Empfangen von Signalen unterschiedlicher Datenraten, wobei die Empfangsvorrichtung ausgebildet ist, die Signalqualität von empfangenen Signalen festzustellen;
- eine Sendevorrichtung, geeignet zum Senden von Signalen auf unterschiedlichen Datenraten;
- eine steuerbare Abschluss-Impedanz;
wobei ein Netzwerk-Knoten dazu ausgebildet, ist die festgestellte Signalqualität einem oder mehreren Netzwerk-Knoten zu übermitteln;
wobei mindestens ein Netzwerk-Knoten im Kommunikations-Netzwerk dazu ausgebildet ist, die festgestellten Signalqualitäten und die Werte der Abschluss-Impedanzen der jeweiligen Netzwerk-Knoten zu erfassen;
wobei mindestens ein Netzwerk-Knoten den weiteren im Kommunikations-Netzwerk befindlichen Netzwerk-Knoten vorgibt, welchen jeweiligen Wert als Abschluss-Impedanz diese einzustellen haben; und
wobei mindestens ein Netzwerk-Knoten Mittel umfasst, zur Bestimmung welche Abschluss-Impedanzen die Netzwerk-Knoten jeweils einstellen sollen, um die Datenrate zwischen den Netzwerk-Knoten und die Signalqualität an den Empfangsvorrichtungen der Netzwerk-Knoten zu optimieren, wobei die Netzwerk-Knoten eingerichtet sind, dass die Optimierung basierend auf einer von der Topologie des Kommunikations-Netzwerkes abhängigen empirischen Zuschaltung bzw. Wegschaltung von Abschluss- Impedanzen für bestimmte Netzwerk-Knoten startet. Derartige Kommunikations-Netzwerke bieten eine hohe Datenübertragungsrate und sind insbesondere für die neuen Internetprotokolle (z.B. IPv6) geeignet, ohne dass zusätzliche Repeater oder Verstärker eingesetzt werden müssen. Weiterhin erlaubt das Kommunikations-Netzwerk eine Durchgängigkeit z.B. von der Steuerungsebene (z.B. Bedienen und Beobachten) bis hinunter zur Feldebene (z.B. zur Sensorik).

Eine vorzugsweise Ausgestaltung der Erfindung liegt darin, dass die Bestimmung der Signalqualität durch die Auswertung der Mehrfachabtastung des (digitalen) Empfangssignals erfolgt. Weiterhin könnte die Signalqualität z.B. über den Störabstand bestimmt werden.

Mit Vorteil ist die steuerbare Abschluss-Impedanz ausgestaltet, um das Leitungsende mit einer geeigneten Impedanz abzuschliessen oder auch offen zu lassen.

Die Aufgabe wird weiterhin gelöst durch einen Netzwerk-Knoten in einem Kommunikations-Netzwerk mit mindestens zwei Netzwerk-Knoten und Zweidrahtverbindungen,
wobei der Netzwerk-Knoten umfasst:
- eine Empfangsvorrichtung, geeignet zum Empfangen von Signalen unterschiedlicher Datenraten, wobei die Empfangsvorrichtung ausgebildet ist, die Signalqualität von empfangenen Signalen festzustellen;
- eine Sendevorrichtung, geeignet zum Senden von Signalen auf unterschiedlichen Datenraten;
- eine steuerbare Abschluss-Impedanz;
- eine Messeinheit (Mikrochip) zum Feststellen der Signalqualität, welche an der Empfangsvorrichtung messbar ist;
- einen Speicher zum Erfassen der Werte der Abschluss-Impedanzen und der einem jeweiligen Wert zuordbaren Empfangsqualität für die Netzwerk-Knoten im Kommunikations-Netzwerk;
- eine Steuereinheit zur Vorgabe eines Einstellwertes für die Abschluss-Impedanzen der Netzwerk-Knoten;
- eine Auswerte- und Berechnungseinheit zur Vorgabe von jeweiligen Einstellwerten für die Abschluss-Impedanzen der Netzwerk-Knoten zur Erzielung einer optimalen Datenrate im Kommunikations-Netzwerk, wobei die Auswertung und Berechnung basierend auf verschiedenen Datenraten erfolgt. In der Gebäudeautomatisierung repräsentieren die Netzwerk-Knoten z.B. Controller, Aktoren oder Sensoren. So fällt z.B. bei Firmware-Updates im Kommunikations-Netzwerk ein sehr hoher Datenverkehr an. Kommunikations-Netzwerke mit den erfindungsgemässen Netzwerk-Knoten ermöglichen insbesondere einen hohen Datenverkehr im Netz, ohne Einbussen bei der Latenzzeit hinnehmen zu müssen. Vorzugsweise werden die Werte der Abschluss-Impedanzen aller Netzwerkknoten erfasst.

Eine vorteilhafte Ausgestaltung der Erfindung liegt darin, dass das Kommunikations-Netzwerk eine freie Topologie aufweist. Es kann flexibel für das Kommunikations-Netzwerk eine beliebige Topologie gewählt werden (Bus, Baum, etc.). Auch können mehrere Kommunikations-Netzwerke, die beliebige Topologien aufweisen, über Router verbunden sein.

Eine vorteilhafte Ausgestaltung der Erfindung liegt darin, dass im Kommunikations-Netzwerk die Datenübertragung mittels Basisband-Modulation erfolgt. Datenübertragung mittels Basisband-Modulation ist insbesondere bei digitalen Übertragungssystemen weit verbreitet, wobei im Signal die gesamte Breite des Übertragungskanals ausnutzbar ist.

Eine vorteilhafte Ausgestaltung der Erfindung liegt darin, dass im Kommunikations-Netzwerk die Daten-Codierung mittels Manchester-Codierung erfolgt. Der Manchester-Code ist selbstsynchronisierend, unabhängig vom Gleichspannungspegel und auf Empfängerseite kann ein Taktsignal präzise regeneriert werden, d.h. aus dem Code selbst ist das Taktsignal ableitbar.

Eine vorteilhafte Ausgestaltung der Erfindung liegt darin, dass die Abschluss-Impedanzen der Netzwerk-Knoten abhängig von der Topologie des Kommunikations-Netzwerks und/oder des Übertragungsverfahrens und/oder der Kabellänge und/oder der Wellenimpedanz gewählt werden. Mit Vorteil erfolgt die Wahl der Abschluss-Impedanzen automatisch, basierend auf einem Algorithmus. Die Werte der Abschluss-Impedanzen der Netzwerk-Knoten werden somit dediziert bezüglich der zugrundeliegenden Infrastruktur des Kommunikations-Netzwerks festgelegt. Mit Vorteil wird der Wert der Abschluss-Impedanz aus der Wellen-Impedanz des Kabels abgeleitet.

Eine vorteilhafte Ausgestaltung der Erfindung liegt darin, dass die Netzwerk-Knoten über das Kommunikations-Netzwerk mit Energie versorgbar sind. Dadurch wird insbesondere der Verkabelungsaufwand reduziert, da für die Stromversorgung der Teilnehmer (d.h. der Netzwerk-Knoten) keine separate Leitungen verlegt werden müssen.

Eine vorteilhafte Ausgestaltung der Erfindung liegt darin, dass ein Netzwerk-Knoten ausgebildet ist, einen oder mehrere andere Netzwerk-Knoten im Kommunikations-Netzwerk mit Energie zu versorgen. Dadurch kann das Kommunikations-Netzwerk leicht um weitere Teilnehmer erweitert werden, ohne Verkabelungsaufwand für die Stromversorgung.

Eine vorteilhafte Ausgestaltung der Erfindung liegt darin, dass mindestens ein Netzwerk-Knoten ausgebildet ist, um aufgrund der Empfangsqualität der Netzwerk-Knoten die maximal mögliche Datenübertragungsrate im Kommunikations-Netzwerk zu ermitteln. Das erfindungsgemässe Verfahren zur Optimierung der Übertragung von digitalen Daten in einem Kommunikations-Netzwerk kann somit mit der sowieso schon im Netzwerk vorhandenen Infrastruktur durchgeführt werden, ohne ein zusätzliches Gerät oder ohne zusätzlich erzeugte Messsignale.

Eine vorteilhafte Ausgestaltung der Erfindung liegt darin, dass mindestens ein Netzwerk-Knoten ausgebildet ist, um eine Verbindung zu einem oder mehreren weiteren Kommunikations-Netzwerken herzustellen. Dadurch, dass ein Netzwerk-Knoten Router-Eigenschaften aufweist, kann das erfindungsgemässe Verfahren zur Optimierung der Übertragung von digitalen Daten über mehrere verbundene Kommunikations-Netzwerke durchgeführt werden.

Die Aufgabe wird ausserdem gelöst durch ein Verfahren zur Optimierung der Übertragung von digitalen Daten in einem Zweidraht-Kommunikations-Netzwerk, das Verfahren umfassend die folgenden Schritte:
Schritt 1: Analyse des Kommunikations-Netzwerkes, bestehend aus Netzwerk-Knoten mit jeweils einer zu- oder abschaltbaren Abschluss-Impedanz und Zweidrahtleitungen zur Verbindung der Netzwerk-Knoten, wobei für die Netzwerk-Knoten die Empfangsqualität bestimmt wird unter Beaufschlagung einer initialen Datenrate für jeden Netzwerk-Knoten, bei Verwendung eines definierten Setups (Ausgangskonfiguration) für die Abschluss-Impedanzen;
Schritt 2: unter Verwendung der initialen Datenrate für jeden Netzwerk-Knoten bestimmen, ob zur Erhöhung der jeweiligen Empfangsqualität eines Netzwerk-Knotens die jeweilige Abschluss-Impedanz zu- oder abgeschaltet werden muss;
Schritt 3: Analyse des Kommunikations-Netzwerkes, wobei für die Netzwerk-Knoten die Empfangsqualität bestimmt wird unter Beaufschlagung einer zweiten Datenrate für jeden Netzwerk-Knoten;
Schritt 4: unter Verwendung der zweiten Datenrate für jeden Netzwerk-Knoten bestimmen, ob zur Erhöhung der Empfangsqualität die jeweilige Abschluss-Impedanz zu- oder abgeschaltet werden muss;

Wiederholung von Schritt 3 und 4 solange, bis keine Verbesserung der Empfangsqualität messbar ist, wobei das Verfahren basierend auf einer von der Topologie des Kommunikations-Netzwerkes abhängigen empirischen Zuschaltung bzw. Wegschaltung von Abschluss-Impedanzen für bestimmte Netzwerk-Knoten startet. Auf diese Weise lässt sich bei einem bekannten Verdrahtungsplan für das Kommunikations-Netzwerk ein Setting finden welches vorteilhaft die kleinste Dämpfung sowie reduzierte Reflexionen für die gewünschte maximale Datenrate aufweist. Ausgehend von diesem Setting wird von dem Verfahren sehr effizient eine optimale Datenübertragungsrate für das Kommunikations-Netzwerk erreicht. Vorteilhaft ist es z.B. Stichleitungen ab einer gewissen Länge abzuschliessen. Stichleitungen sind Leitungen, welche von einem Signalpfad abzweigen. Die Erfinder gehen dabei von der Idee aus, dass wenn sich ein Knoten ohne Abschluss-Impedanzen durch Reflexionen unerwünscht bemerkbar macht, d.h. insbesondere sich die Datenrate von diesem Knoten zu anderen Knoten merkbar reduziert, durch das gezielte Setzen von Abschlusswiderständen im Kommunikations-Netzwerk die Datenrate verbessert. Wobei zugeschaltete Abschlussimpedanzen die Signaldämpfung erhöhen und entfernt werden, wenn die Abschlussimpedanz eines benachbarten Knotens die Reflexionen ausreichend eliminiert.

Mit Vorteil wird pro Netzwerkknoten die Empfangsqualität der empfangenen Signale von allen anderen Netzwerkknoten ausgewertet.

Mit Vorteil ist die steuerbare Abschluss-Impedanz ausgestaltet, um das Leitungsende mit einer geeigneten Impedanz abzuschliessen oder auch offen zu lassen.

Eine vorteilhafte Ausgestaltung der Erfindung liegt darin, dass im Betrieb erkannt wird, ob im Kommunikations-Netzwerk ein neuer Netzwerk-Knoten zugeschaltet wird oder ein vorhandener Netzwerk-Knoten abgeschaltet wird oder ob eine neue Verbindung angeschlossen wird oder ob eine vorhandene Verbindung entfernt wird. Dadurch kann auf Veränderungen im Kommunikations-Netzwerk schnell und flexibel reagiert werden.

Eine vorteilhafte Ausgestaltung der Erfindung liegt darin, dass nach dem Erkennen einer Veränderung das Kommunikations-Netzwerk erneut bezüglich der Empfangsqualität und/oder der Datenrate optimiert wird. Dadurch ist sichergestellt, dass bei einer Änderung im Kommunikations-Netzwerk anschliessend wieder eine optimale Datenübertragung im Kommunikations-Netzwerk erreicht wird.

Eine vorteilhafte Ausgestaltung der Erfindung liegt darin, dass in den Schritten 3 und 4 die zweite Datenrate ausgehend von der initialen Datenrate durch eine schrittweise Erhöhung der Datenrate bestimmt wird. Dadurch wird iterativ in inkrementellen Schritten eine optimale Datenrate im Kommunikations-Netzwerk erreicht. Inkrementelle schrittweise Erhöhungen der Datenrate sind leicht realisierbar.

Eine vorteilhafte Ausgestaltung der Erfindung liegt darin, dass als initiale Datenrate 50kBit/s verwendet wird. Mit einer initialen Datenrate von 50kBit/s als Startpunkt für schrittweise inkrementelle Erhöhungen der Datenrate wird schnell eine optimale Datenrate im Kommunikations-Netzwerk erreicht. Mit Vorteil wird durch einen vorhergehenden Test das initiale Setup (d.h. die Anfangskonfiguration) der Abschluss-Impedanzen ermittelt.

Eine vorteilhafte Ausgestaltung der Erfindung liegt darin, dass in den Schritten 3 und 4 die zweite Datenrate ausgehend von der initialen Datenrate durch eine schrittweise Reduzierung der Datenrate bestimmt wird. Auch dekrementelle schrittweise Verminderungen der Datenrate sind leicht realisierbar. Eine vorteilhafte Ausgestaltung der Erfindung liegt darin, dass als initiale Datenrate 1 MBit/s verwendet wird. Ausgehend von einer initialen Datenrate 1 MBit/s als Startpunkt für eine schrittweise dekrementelle Verminderung der Datenrate schnell eine optimale Datenrate im Kommunikations-Netzwerk erreicht.

Eine vorteilhafte Ausgestaltung der Erfindung liegt darin, dass in Schritt 1 alle Abschluss-Impedanzen entweder weggeschaltet oder zugeschaltet sind. Dadurch kann für die Netzwerk-Knoten sehr einfach und schnell eine erste Empfangsqualität als Referenzqualität bestimmt werden.

Eine vorteilhafte Ausgestaltung der Erfindung liegt darin, dass der Wert der Abschluss-Impedanz an die Wellen-Impedanz des Netzwerkes angepasst ist. Somit kann dediziert und effizient für jede jeweils vorliegende Netzwerk-Topologie die jeweils optimale Datenübertragungsrate erreicht werden.

Eine vorteilhafte Ausgestaltung der Erfindung liegt darin, dass der Wert der Abschluss-Impedanz im Bereich von 100 Ohm liegt. Ein Wert von 100 Ohm bzw. im Bereich um 100 Ohm (± 10%) als Abschluss-Impedanz hat sich insbesondere für Twisted-Pair-Leitungen als vorteilhaft erwiesen.

Eine vorteilhafte Ausgestaltung der Erfindung liegt darin dass der Wert der Abschluss-Impedanz variabel ist. Dadurch kann der Wert der Abschluss-Impedanz dediziert auf jeweilige die Infrastruktur und Topologie des Kommunikations-Netzwerks abgestellt werden, um eine jeweils optimale Datenrate zu erreichen.

Eine vorteilhafte Ausgestaltung der Erfindung liegt darin, dass die Bestimmung, welche Abschluss-Impedanzen zur Erhöhung der Empfangsqualität zu- bzw. weggeschaltet werden müssen, durch ein mathematisches Optimierungsverfahren (z.B. lineare Optimierung) erfolgt. Durch Verwendung eines mathematischen Optimierungsverfahrens zur Entscheidung, welche Abschluss-Impedanzen zur Erhöhung der Empfangsqualität zu- bzw. weggeschaltet werden müssen, wird insbesondere die Effizienz des Verfahrens erhöht.

Eine vorteilhafte Ausgestaltung der Erfindung liegt darin, dass das Verfahren auf jeden Netzwerk-Knoten angewendet wird. Dadurch wird eine optimale Datenübertragungsrate für das gesamte Kommunikations-Netzwerk erreicht.

Eine vorteilhafte Ausgestaltung der Erfindung liegt darin, dass das Verfahren das Verfahren parallel zum Datenbetrieb abläuft. Dadurch ist während der Optimierung ein Betrieb des Kommunikationssystems möglich.

Die Erfindung sowie vorteilhafte Ausführungen der vorliegenden Erfindung werden am Beispiel der nachfolgenden Figuren erläutert. Dabei zeigen:
- FIG 1: ein erstes beispielhaftes Kommunikations-Netzwerk für eine Gebäudeautomation,
- FIG 2: den Frequenzgang eines beispielhaften Kanals im Kommunikations-Netzwerk von FIG 1,
- FIG 3: ein zweites beispielhaftes Kommunikations-Netzwerk für eine Gebäudeautomation,
- FIG 4: zwei beispielhafte Kommunikations-Netzwerke die über einen Router miteinander gekoppelt sind,
- FIG 5: ein Blockdiagramm eines ersten beispielhaften Netzwerk-Knotens,
- FIG 6: ein Blockdiagramm eines zweiten beispielhaften Netzwerk-Knotens,
- FIG 7: ein beispielhaftes Ablaufdiagramm zur Durchführung der vorliegenden Erfindung,
- FIG 8: ein beispielhaftes Ablaufdiagramm für einen Wegschalt-Algorithmus von Abschluss-Impedanzen,
- FIG 9: ein beispielhaftes Ablaufdiagramm für einen Zuschalt-Algorithmus von Abschluss-Impedanzen,
- FIG 10: eine beispielhafte Messtabelle mit Abschlusswiderständen, und
- FIG 11: ein Blockdiagramm für einen dritten beispielhaften Netzwerk-Knoten.

In der Gebäudeautomation sind Netzwerke als komplexe baumförmige Gebilde mit mehreren Knoten, vielen Endgeräten und ungleich langen Leitungsstrecken im Einsatz. Die verwendeten Kabel sind selten vom Typ der echten Twisted Pair mit entsprechend geringer Dämpfung pro Meter, sondern oftmals nur konventionelle Sternviererkabel mit einer minimalen Verdrehung der Adern. Der Frequenzgang dieser Kabel zeigt eine deutliche und hohe Zunahme der Dämpfung pro Meter mit der Frequenz. Weiterhin können längenabhängige Verzerrungen auftreten. Dadurch wird die maximale Datenrate begrenzt. Signale (häufig DC-freie Leitungscodierungen wie z.B. Manchester Codierung) welche, je nach Bitfolge spektrale Anteile mit Schwerpunkt bei der Datenrate und wesentlichen Anteilen bis zur doppelten Datenrate besitzen, erleiden dadurch im zeitlichen Verlauf starke Amplitudenschwankungen.

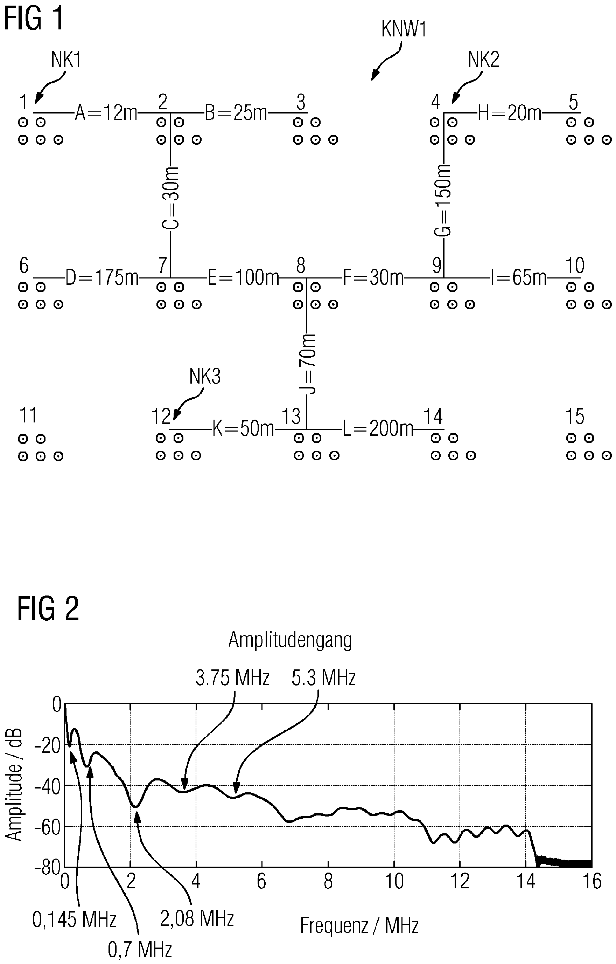

Figur 1 zeigt ein erstes beispielhaftes Kommunikations-Netzwerk KNW1 für eine Gebäudeautomation. Aus Gründen der Übersichtlichkeit sind im Kommunikations-Netzwerk KNW1 nur einige Netzknoten mit Bezugszeichen NK1 - NK3 versehen.

In Figur 1 werden durch die Zahlen 1 bis 15 Anschluss-, Abzweig- und Endpunkte im Kommunikationsnetz KNW1 beispielshaft bestimmt. An jedem der Anschluss-, Abzweig- bzw. Endpunkte können ein oder mehrere Netzwerkknoten NK1 bis NK3 angeschlossen sein.

Im baumförmigen Kommunikations-Netzwerk KNW1 gemäss Figur 1 werden die Signale eines Senders an jedem Endpunkt reflektiert, sofern die Leitung am Ende nicht mit einer passenden Abschluss-Impedanz versehen ist (typ. Wert 100 Ohm). Dies ist aus der Leitungstheorie bestens bekannt.

Der Frequenzgang, insbesondere von Zweidrahtleitungen, zeigt eine deutliche Zunahme der Dämpfung in Abhängigkeit der Leitungslängen und der Frequenz. Werden die einzelnen Enden der Abzweigungen nicht mit der Wellenimpedanz der Leitung abgeschlossen entstehen Reflexionen, welche zu allen anderen Netzwerknoten wandern und das Signal so durch Addition verzerren. Werden alle Enden abgeschlossen, so nimmt die Dämpfung weiter zu, da der Sender (jeder Knoten letztlich) immer mehr belastet wird. Durch die Dämpfung und die Verzerrungen erfolgt eine Minderung des Signalpegels und damit der Übertragungsqualität im Kommunikations-Netzwerk.

Nehmen im Unterschied zu den in der Nachrichtentechnik meist gebräuchlichen Punkt-Punkt Verbindungen (z.B. Ethernet, TV-Koaxialkabel) viele Endgeräte in einem solchen Kommunikations-Netzwerk KNW1 teil, so führt der Anschluss einer Abschluss-Impedanz an jedem Endpunkt zu einer sehr tiefen Gesamtimpedanz des Kommunikations-Netzwerks KNW1 und damit zu einer enorm hohen Dämpfung der Signale. Der Sender müsste eine sehr hohe Leistung in das niederohmige Netz KNW1 einspeisen.

Es treten also bei derartigen Kommunikations-Netzwerken KNW1 KNW1 am Empfänger jedes Endgerätes Signale mit Verzerrungen und zusätzlich eine Vielzahl von, an anderen Netzwerkenden reflektierten, verzögerten Signalkopien auf. Dies wird besonders dann gravierend, wenn ein reflektiertes Signal mit Frequenzinhalt bei der Datenrate verzögert mit dem eigentlich zu empfangenden Signalanteil mit Frequenzen bei der doppelten Datenrate überlagert. Weil das erstere Signal bei tiefer Frequenz weniger gedämpft wird, maskiert es gewissermassen das eigentliche zweite Signal. Je grösser die Verzögerung, d.h. je länger die einzelnen Äste des Kommunikations-Netzwerks KNW1 sind, desto kritischer wird die Situation. Dies ist aus der Theorie als Intersymbolinterferenz bekannt und wirkt hier je nach Bitfolge verschärft. Damit ist bei einfachen Empfängerarchitekturen eine obere Datenrate durch das Netzwerk KNW1 gegeben. Diese Grenze liegt heute bei ca. 10 kBit/s für Netzwerke mit Längen bis 1000 m.

Figur 2 zeigt den Frequenzgang eines beispielhaften Kanals im Kommunikations-Netzwerk von Figur 1, mit dem Sender bei Anschluss 4 (NK2) und dem Empfänger bei Anschluss 12 (NK3). Im Diagramm von Figur 2 ist auf der Abszissenachse die Frequenz in MHz aufgetragen und auf der Ordinatenachse die jeweilige Amplitude bzw. der Pegel (in dB) dazu.

Die Intersymbolinterferenz (ISI bzw. Symbolübersprechen) beschreibt bei der digitalen Datenübertragung Störungen zwischen zeitlich aufeinander folgend gesendeten Symbolen. Dies lässt sich auch im Frequenzbereich bzw. Frequenzgang zeigen. Neben der bereits erwähnten mit der Frequenz zunehmenden Dämpfung ergibt sich durch das verzögerte Signal addiert zum direkten Signal eine Nullstelle im Frequenzgang abhängig von den Längen der Stichleitungen, welche das Netzwerk KNW1 aufweist. Die Nullstelle liegt etwa bei der Frequenz f = c/4L mit c der Ausbreitungsgeschwindigkeit auf dem Kabel und L der Länge der verantwortlichen Stichleitung zum verursachenden Anschluss. In der Darstellung gemäss Figur 2 kann der Einbruch bei 700 kHz wahrscheinlich dem reflektierten Signal der Stichleitung zu Anschluss 10 in Figur 1 zugeordnet werden. Stichleitungen sind Leitungen, welche von einem Signalpfad abzweigen. Der Signalpfad kann dabei die Verbindung zwischen zwei beliebigen Knoten (z.B. NK2 und NK3) im Netzwerk KNW1 sein.

Insbesondere die neuen Internetprotokolle (z.B. IPv6) und Techniken lassen den Wunsch nach direkter Durchgängigkeit der Kommunikations-Netzwerke bis zum Sensor oder Aktor auch in der Gebäudeautomation aufkommen. Dazu wäre die Erhöhung der Datenrate um den Faktor 10 aber äusserst nützlich, da diese Protokolle wesentlich mehr Overhead mitbringen und neue Anwendungen (z.B. Firmware-Download) mehr Datendurchsatz verlangen. Zudem sollen auch die Netzwerklängen nicht kürzer und die Anzahl Endgeräte (z.B. Sensoren) nicht kleiner werden, sodass aus Kostengründen keine zusätzlichen Repeater oder Verstärker eingesetzt werden müssen.

Das erfindungsgemässe Verfahren zur Optimierung der Übertragung von digitalen Daten in einem Zweidraht-Kommunikations-Netzwerk ist für unterschiedliche Topologien von Netzwerken und für Netzwerke mit unterschiedlichen Typen von Netzknoten (z.B. Controller, Sensoren, Aktoren, Brandmelder, Beleuchtung) verwendbar.

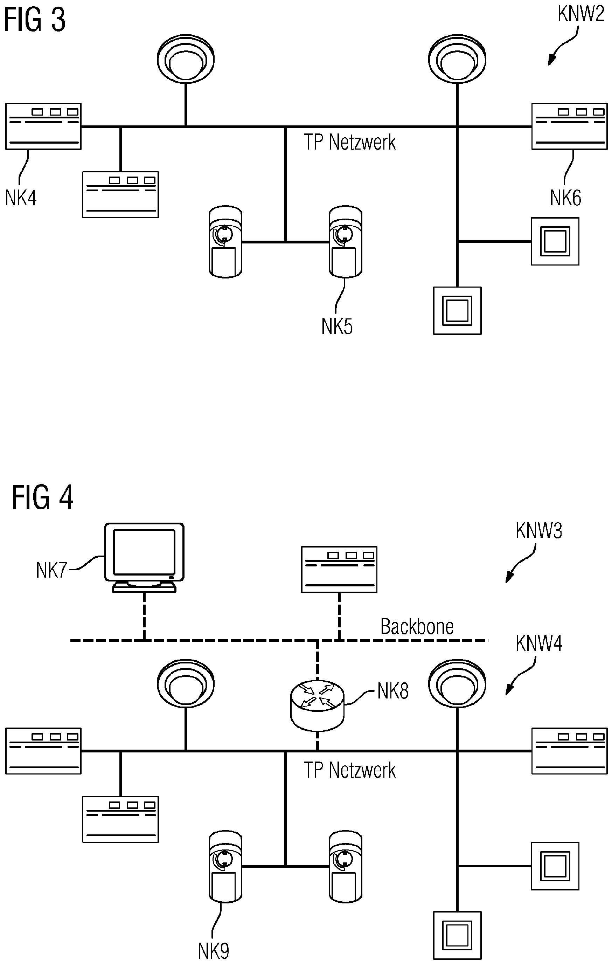

Figur 3 zeigt ein zweites beispielhaftes Kommunikations-Netzwerk KNW2 als Standalone Zweidraht-Netzwerk (z.B. Twisted Pair) für eine Gebäudeautomation. In der Darstellung gemäss Figur 3 sind aus Gründen der Übersichtlichkeit nur drei Netzknoten (NK4 - NK6) dargestellt. Beim beispielhaften Kommunikations-Netzwerk KNW2 kann es sich z.B. um ein KNX System handeln.

Figur 4 zeigt zwei beispielhafte Kommunikations-Netzwerke KNW3 und KNW4, die über einen Router NK8 miteinander gekoppelt sind. In Figur 4 ist ein beispielhaftes Zweidraht-Netzwerk KNW3 über einen Router NK8 mit dem Backbone-Netz KNW4 gekoppelt. Auch in der Darstellung gemäss Figur 4 sind aus Gründen der Übersichtlichkeit nur drei Netzknoten (NK7 - NK9) dargestellt.

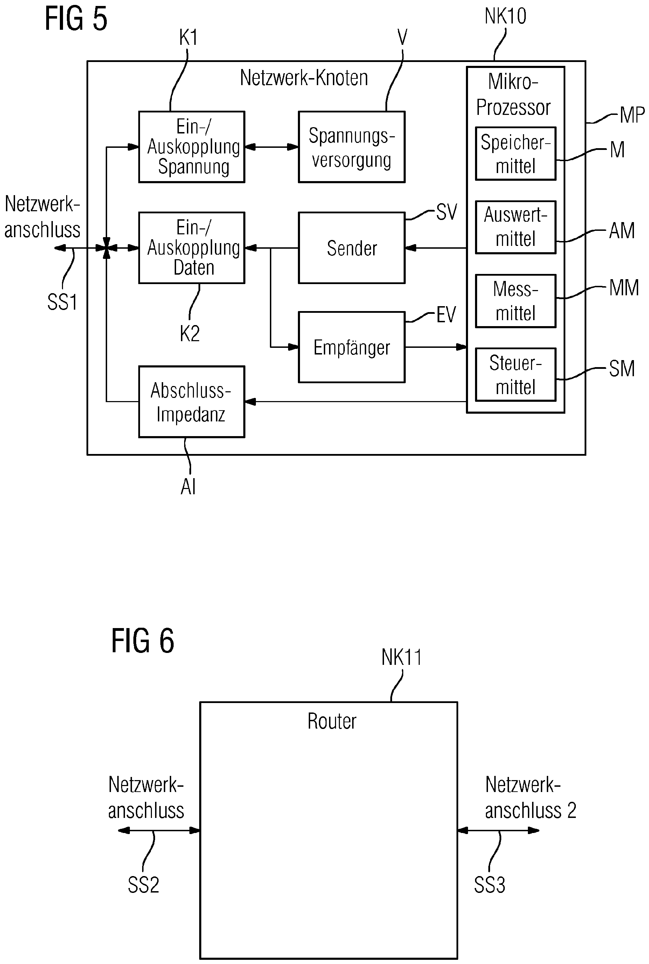

Figur 5 zeigt ein Blockdiagramm eines ersten beispielhaften Netzwerk-Knotens NK10. Der Netzwerk-Knoten NK10 ist über eine geeignete Schnittstelle SS1 (Netzwerkanschluss) mit einem Kommunikations-Netzwerk, das Zweidrahtverbindungen (mit Vorteil Twisted Pair-Verbindungskabel), verbunden.

Der beispielhafte Netzwerk-Knoten NK10 umfasst:
- eine Empfangsvorrichtung EV, geeignet zum Empfangen von Signalen unterschiedlicher Datenraten, wobei die Empfangsvorrichtung EV ausgebildet ist, die Signalqualität von über die Schnittstelle SS1 empfangenen Signalen festzustellen;
- eine Sendevorrichtung SV, geeignet zum Senden von Signalen auf unterschiedlichen Datenraten über die Schnittstelle SS1;
- eine steuerbare Abschluss-Impedanz AI;
- eine Messeinheit oder ein Messmittel MM zum Feststellen der Signalqualität, welche an der Empfangsvorrichtung EV messbar ist;
- einen Speicher M zum Erfassen der Werte der Abschluss-Impedanzen und der einem jeweiligen Wert zuordbaren Empfangsqualität für die Netzwerk-Knoten im Kommunikations-Netzwerk;
- eine Steuereinheit SM zur Vorgabe eines Einstellwertes für die Abschluss-Impedanzen der Netzwerk-Knoten;
- eine Auswerte- und Berechnungseinheit AM zur Vorgabe von jeweiligen Einstellwerten für die Abschluss-Impedanzen der Netzwerk-Knoten zur Erzielung einer optimalen Datenrate im Kommunikations-Netzwerk, wobei die Auswertung und Berechnung basierend auf verschiedenen Datenraten erfolgt. Die Ein- bzw. Auskopplung von Spannung erfolgt durch ein geeignetes Koppelelement K1, die Ein- bzw. Auskopplung von Daten erfolgt durch ein geeignetes Koppelelement K2.

Mit Vorteil sind die Steuereinheit SM, die Messeinheit MM, die Auswerte- und Berechnungseinheit AM, und die Speichermittel M in einer Verarbeitungseinheit MP (z.B. ein MikroProzessor) integriert und mit geeigneten Hardware- bzw. Softwaremittel realisiert.

Die zu- und abschaltbare Abschluss-Impedanz AI kann durch den Mikroprozessor MP direkt angesteuert werden.

In einer weiteren Ausgestaltung kann die zu- und abschaltbare Abschluss-Impedanz AI auch im Koppelelement K2 integriert sein.

Figur 6 zeigt ein Blockdiagramm eines zweiten beispielhaften Netzwerk-Knotens NK11. Beim beispielhaften Netzwerk-Knoten NK11 handelt es sich um einen Router, geeignet zur Kopplung zweier Kommunikations-Netzwerke, die unterschiedliche Topologien, Protokolle und/oder Übertragungsverfahren aufweisen können. Die zu koppelnden Kommunikations-Netzwerke sind über entsprechende Netzwerkanschlüsse SS2 bzw. SS3 an den Router ankoppelbar. Der beispielhafte Netzwerk-Knoten NK11 kann dabei nur Router-Funktionalität aufweisen, oder der Netzwerk-Knoten NK11 kann als normaler Teilnehmer (z.B. Sensor, Aktor) ausgebildet sein und dabei zusätzlich Router-Funktionalität umfassen.

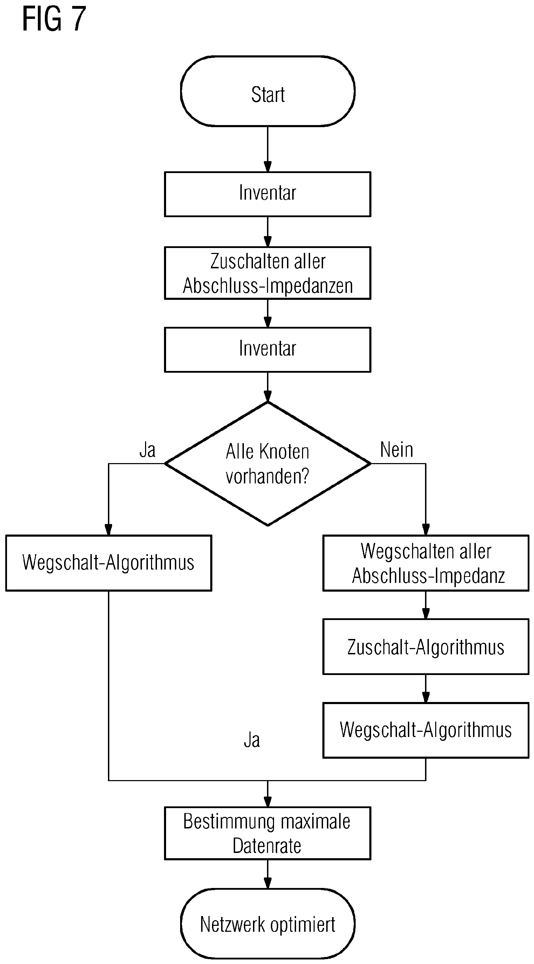

Figur 7 zeigt ein beispielhaftes Ablaufdiagramm zur Optimierung der Übertragung von digitalen Daten in einem Zweidraht-Kommunikations-Netzwerk.

Mit Vorteil werden nach der Installation aber vor dem Nutzbetrieb des Kommunikations-Netzwerkes, gesteuert durch einen als Master ausgezeichneten Netzwerk-Knoten, Testdaten von jedem Netzwerk-Knoten ausgesendet und von jeweils jedem der übrigen Netzwerk-Knoten empfangen und auf Übertragungsfehler geprüft. Dieser Vorgang kann nun für verschiedene Kombinationen (prinzipiell auch für alle) von angeschlossenen Abschluss-Impedanzen durchgeführt werden. Die Abschluss-Impedanzen sind durch ein Kommando vom Master individuell adressiert elektronisch zu- und wegschaltbar. Dieser Vorgang wird zudem bei einem initialen Setting der Abschluss-Impedanzen für jede Datenrate durchgeführt. Der Master kann dadurch die maximale Datenrate für das Gesamtnetz wie auch zwischen den einzelnen Knoten sowie die zu setzenden Abschluss-Impedanzen ermitteln. Nach diesem Vorgang bleiben die Verhältnisse im Kommunikations-Netzwerk solange konstant, bis eine Änderung am Kommunikations-Netzwerk durchgeführt wird, wie z.B. Zufügen von Knoten, Entfernen von Knoten, Veränderung der Verkabelung. Nur in diesem Fall muss der Prozess wiederholt werden.

Für den Startpunkt dieses Auto Setting Prozesses gibt es 3 Möglichkeiten:
1) Alle Abschlüsse sind weggeschaltet. Es ist immer der Quellenwiderstand in jedem Sender vorhanden.
2) Alle Abschlüsse sind zugeschaltet. Es ist immer der Quellenwiderstand im Sender vorhanden.
3) Die mit der empirisch theoretischen Methode gefundenen Abschlüsse sind gesetzt. Es ist immer der Quellenwiderstand im Sender vorhanden.

Mit der ersten und zweiten Möglichkeit ist nicht sichergestellt, dass alle Knoten erreichbar sind (zuviel Reflexion bzw. zuviel Dämpfung). Mit der dritten Möglichkeit ist die Erreichbarkeit gegeben, zumindest für tiefe Datenraten, möglicherweise gibt es aber weitere Verbesserungen (siehe Abschnitt Weitere Optionen).

Am einfachsten würde man nun alle Kombinationen von Abschluss-Settings ausprobieren. Dies ergäbe 2^{N} Tests (dabei ist N die Anzahl der Knoten), was bei ca. 10 s Testzeit pro Test schnell unermesslich gross wird. Deshalb wurden Algorithmen gesucht, welche eine nur linear mit N anwachsende Testzeit haben.

Die Erfinder gehen dabei von der folgenden Idee aus, dass wenn sich ein Knoten ohne Abschluss-Impedanz durch Reflexionen unerwünscht bemerkbar macht, d.h. die Datenrate zu anderen Knoten merkbar reduziert, dies nicht besser geheilt werden kann als mit dem Setzen der Abschluss-Impedanz für diesen Knoten.

Aus dieser Idee heraus wurden zwei Vorgehen (Algorithmen) entwickelt und ihre Wirksamkeit durch Tests nachgewiesen. Es sind dies der "Remove RLoad" Algorithmus, der zuerst alle Abschlüsse setzt und dann mit Wegschalten beginnt und der "Add RLoad" Algorithmus, der ausser dem Quellenwiderstand keine Abschlüsse aufweist und mit Zuschalten beginnt.

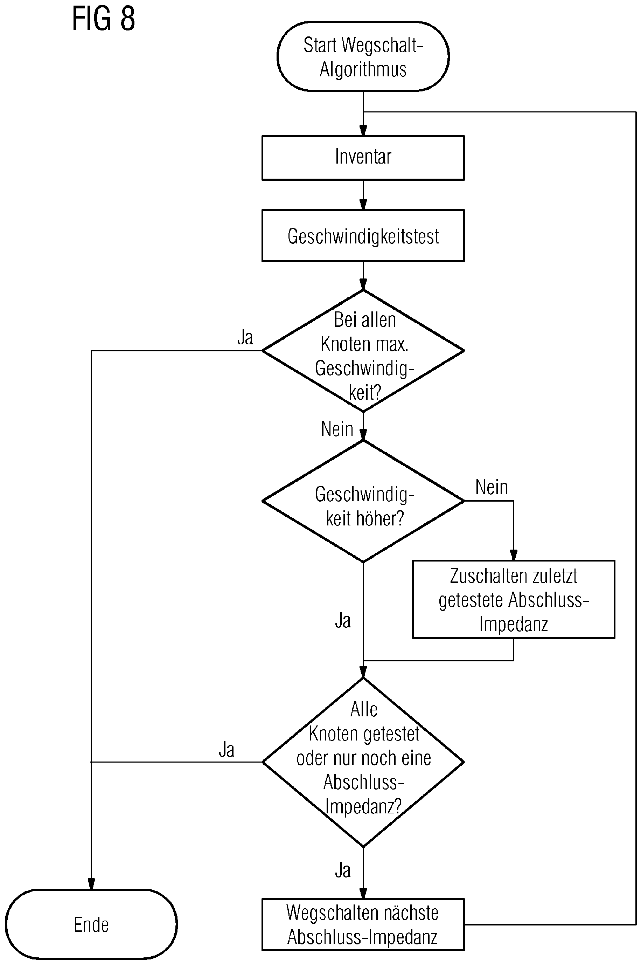

Der "Remove Rload" Algorithmus (Wegschalt-Algorithmus, siehe Figur 8) ist schneller und geht von einer gutmütigeren Anfangskonfiguration aus, da er von Anfang an die Stichleitungen abgeschlossen hat. Jedoch kann bei vielen angeschlossenen Knoten die Dämpfung sehr gross werden, womit gewisse Knoten unerreichbar werden könnten.

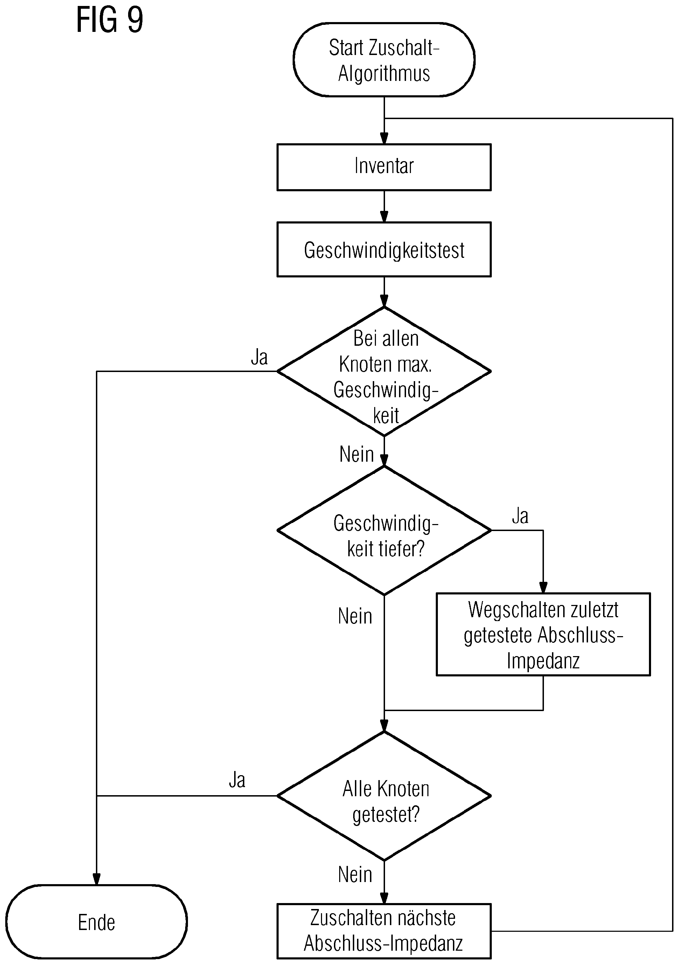

Der "Add Rload" Algorithmus (Zuschalt-Algorithmus, siehe Figur 9) hat in der Anfangskonfiguration keine aktiven Abschluss-Impedanzen, was zu einer tendenziell ungünstigeren Anfangskonfiguration führt. Durch die Frequenzeinbrüche kann es sein, dass einzelne Knoten nicht erreicht werden können. Durch das Aktivieren der Abschluss-Impedanzen werden jedoch immer mehr Knoten erreichbar.

Wenn keine manuelle Anfangskonfiguration im Kommunikations-Netzwerk vorgegeben ist, kann mit Vorteil ein automatisiertes "Channel Setup" verwendet werden, wie in Figur 7 beispielhaft dargestellt.

Dabei wird zuerst ein Inventory bzw. eine Inventar-Erfassung (Erfassen der erreichbaren Knoten) durchgeführt um zu sehen, welche Knoten im Netzwerk vorhanden sind. Danach werden alle Abschluss-Impedanzen aktiviert und nochmals ein Inventory durchgeführt. Wenn immer noch alle Knoten erreichbar sind, kann mit dem "Remove Rload" Algorithmus (Wegschalt-Algorithmus) gearbeitet werden. Ansonsten ist der "Add Rload" Algorithmus (Zuschalt-Algorithmus) besser geeignet, da weniger Dämpfung auf den Übertragungskanälen vorhanden ist. Vorteilhaft ist die Anzahl Knoten dem Master bekannt, damit er weiss wann er mit alle Knoten kommunizieren kann, dies ist aber nicht zwingend.

Figur 8 zeigt ein beispielhaftes Ablaufdiagramm für einen Wegschalt-Algorithmus ("Remove Rload") von Abschluss-Impedanzen. Um den Wegschalt-Algorithmus ("Remove Rload") zu starten müssen vorgängig die Abschlusswiderstände aller Knoten aktiviert sein. Im Algorithmus wird dann eine Abschluss-Impedanz nach der anderen deaktiviert und jeweils ein Speed Test (Geschwindigkeitstest) durchgeführt (z.B. über alle Netzwerkknoten). Wenn durch das Deaktivieren der Abschluss-Impedanz eine Stichleitung nicht mehr abgeschlossen ist und diese das Netzwerk negativ beeinflusst, werden einige Knoten nicht mehr auf der gleich hohen Datenrate kommunizieren können. Somit wird das Netzwerk gesamthaft schlechter und die Abschluss-Impedanz wird wieder aktiviert. Ist keine Verschlechterung feststellbar bleibt die Abschluss-Impedanz deaktiviert. Dies wird so lange gemacht, bis alle Abschluss-Impedanzen überprüft wurden oder nur noch eine Abschluss-Impedanz aktiviert ist. Die Konfiguration wird auch beendet, wenn alle Knoten mit allen auf der maximalen Datenrate kommunizieren können d.h. eine ausreichende Anzahl der Abschluss-Impedanzen ist aktiviert.

Mit jeder Iteration wird ein Inventory (Inventar) durchgeführt. Damit können Knoten erkannt werden, die aufgrund der geringeren Dämpfung durch das Deaktivieren einer Abschluss-Impedanz erreichbar werden. Bei den neu erkannten Knoten muss die Abschluss-Impedanz aktiviert werden, damit der Algorithmus prüfen kann ob bei diesen Knoten die Abschluss-Impedanz gesetzt sein muss oder nicht. Unter Umständen kann die Abschluss-Impedanz des neuen Knotens eine zuvor nicht entfernte Abschluss-Impedanz überflüssig machen. Darum sollten die zuvor überprüften Abschluss-Impedanzen nochmals überprüft werden, falls die Abschluss-Impedanz beim neu gefundenen Knoten gesetzt sein muss.

Mit diesem Algorithmus werden normalerweise N+2 Iterationen benötigt, womit ein Channel Setup (Kanal-Konfiguration) für 64 Knoten ca. 10min dauern würde, da ein Speed Test ca. 10s dauert. Der Speed Test (Geschwindigkeitstest) ist das Element einer Iteration das am meisten Zeit benötigt. (N ist dabei die Anzahl der Netzknoten)

Stichleitungen sind Leitungen, welche von einem Signalpfad abzweigen. Der Signalpfad kann dabei die Verbindung zwischen zwei beliebigen Knoten (z.B. A und B) in einem Netzwerk sein.

Figur 9 zeigt ein beispielhaftes Ablaufdiagramm für einen Zuschalt-Algorithmus ("Add Rload") von Abschluss-Impedanzen in einem Kommunikations-Netzwerk. Bevor der Zuschalt-Algorithmus ("Add Rload") gestartet wird, wird das initiale Setup bestimmt. Dabei kann eine bestehende (z.B. manuelle oder durch empirische Regeln vorbestimmte) Konfiguration übernommen werden oder allenfalls die Abschluss-Impedanz bei einem Master (automatisch) gesetzt werden. Ein Master kann dabei seine eigene Abschluss-Impedanz selbst intelligent steuern. Wenn es mehrere potentielle Master im Netzwerk gibt, können diese Netzwerkknoten den Master aushandeln oder aufteilen.

Danach wird eine Abschluss-Impedanz nach der anderen aktiviert und jeweils ein Speed Test (Geschwindigkeitstest) durchgeführt. Wenn durch das Aktivieren der Abschluss-Impedanz das Kommunikations-Netzwerk gesamthaft schlechter wird, wird die Abschluss-Impedanz wieder deaktiviert. Dies wird solange gemacht bis alle Abschluss-Impedanzen überprüft wurden. Da je nach Topologie des Netzes mehrere Abschluss-Impedanzen nötig sind um eine Verbesserung zu erreichen, werden Abschluss-Impedanzen aktiv gehalten solange sie keine Verschlechterung des Netzwerkes bringen.

Die Konfiguration wird auch beendet, wenn alle Knoten mit allen auf der maximalen Datenrate kommunizieren können. Zudem wird mit jeder Iteration auch ein Inventory (Inventar) (Erfassen der erreichbaren Knoten) durchgeführt um Knoten die neu erreichbar sind zu erkennen. Neu erkannte Knoten müssen die Abschluss-Impedanz deaktivieren. Der Algorithmus prüft auch bei diesen Knoten ob die Abschluss-Impedanz gesetzt sein muss oder nicht. Ein Neuanfang des Algorithmus ist sinnlos, da diese Knoten in der Startkonfiguration wiederum nicht erreichbar wären.

Wenn alle Abschluss-Impedanzen überprüft wurden, wird der Wegschalt-Algorithmus ("Remove Rload") (siehe Figur 8) verwendet um zu überprüfen, ob alle hinzugefügten Abschluss-Impedanzen notwendig sind. Dies ist nötig, um überflüssige Abschluss-Impedanzen zu entfernen und somit weniger Dämpfung auf dem Kanal zu haben.

Überflüssige Abschluss-Impedanzen können entstehen, wenn eine Abschluss-Impedanz aktiviert wird und dies zu einer Verbesserung des Netzwerkes führt, jedoch eine andere Abschluss-Impedanz, die später überprüft wird diese Verbesserung besser bewerkstelligt. Dies ist z.B. auf einer Bustopologie der Fall, wenn die Abschluss-Impedanz am Ende der Busleitung nicht zuerst überprüft wird.

Mit diesem Algorithmus werden maximal 2*N+2 Iterationen benötigt, womit ein Channel Setup für 64 Knoten ca. 20min dauern würde, da ein Speed Test ca. 10s dauert. Der Speed Test ist das Element einer Iteration das am meisten Zeit benötigt. N ist dabei die Anzahl der Netzknoten.

Damit müssen nicht alle möglichen Konfigurationen (2^N) getestet werden, sondern es muss nur jede Abschluss-Impedanz für sich ein- bzw. ausgeschaltet werden. N ist dabei die Anzahl Knoten im Netzwerk (inklusive Master). Bei dem "Remove Rload" Algorithmus sind höchstens N Iterationen nötig, da jede Impedanz einmal deaktiviert wird. Für den "Add Rload" Algorithmus könnten bis zu 2*N Iterationen möglich sein, da eine Abschluss-Impedanz zuerst aktiviert wird und falls er als nützlich erachtet wird, nochmals deaktiviert wird. Somit steigt der Aufwand linear mit der Anzahl Knoten.

Pro Iteration sind ein Inventory (Inventar), ein Speed Test und eine Konfiguration des Netzwerkes nötig. Alle diese Elemente nehmen auch linear mit der Anzahl Knoten zu. Dies gilt insbesondere für den Speed Test, da mit einer Messung N Messresultate erzeugt werden. Dies wird erreicht, indem alle Knoten gleichzeitig das Messpaket des sendenden Knoten auswerten.

Es ist auch möglich den Nutzbetrieb vor Abschliessen des Channel Setups (Kanal-Konfiguration) aufzunehmen, sobald alle Knoten zu allen auf der tiefsten Datenrate kommunizieren können. Danach kann während dem Nutzbetrieb das Channel Setup beendet werden. Dazu werden z.B. abwechslungsweise Nutzdaten übermittelt und Geschwindigkeitstests durchgeführt. Dies verlangsamt beide Prozesse bzw. Vorgehen, ermöglicht es jedoch das System, d.h. das Kommunikations-Netzwerk früher in Betrieb zu nehmen.

### Reihenfolge der zu testenden Knoten

Die Reihenfolge in der die Abschluss-Impedanzen getestet werden hat einen nicht zu vernachlässigen Einfluss auf die Endkonfiguration. Tests haben gezeigt, dass mit jeder Reihenfolge eine gute Konfiguration gefunden werden kann. Es hat sich jedoch auch gezeigt, dass mit einer intelligenten Reihenfolge die Konfiguration schneller und zuverlässiger verbessert werden kann.

Zum Beginn eines Channel Setups wird immer ein Speed Test mit der initialen Konfiguration durchgeführt. Mit dem Speed Test (Geschwindigkeitstest) lässt sich auch die Empfangsqualität der einzelnen Netzwerk-Knoten beurteilen. Je besser andere Knoten empfangen werden, sprich je höher die Datenraten sind auf denen die Testpakete empfangen werden, desto besser ist die Empfangsqualität. Während dem Channel Setup wird mit jeder Iteration ein neuer Speed Test durchgeführt, womit auch die Empfangsqualität nach jeder Iteration neu beurteilt wird.

Beim Zuschalt-Algorithmus ("Add Rload", siehe Figur 9), bei dem in der Initialen Konfiguration keine Abschluss-Impedanzen aktiviert sind, sind die Knoten mit der besten Empfangsqualität tendenziell nicht von Stichleitungen betroffen, sprich sie sind tendenziell selbst die Verursacher von Frequenzselektiven Einbrüchen. Wenn diese Knoten nun zuerst überprüft werden, wird das Netzwerk schneller und zuverlässiger verbessert.

Beim Wegschalt-Algorithmus ("Remove Rload", siehe Figur 8), bei dem in der Initialen Konfiguration alle Abschluss-Impedanzen aktiviert sind, sind die Knoten mit der besten Empfangsqualität tendenziell Knoten die in der Mitte des Netzwerkes sind. Dies sind die Knoten bei denen die Abschluss-Impedanz tendenziell nicht benötigt wird, da sie nicht an einer langen Stichleitung sind. Aufgrund der Dämpfung ist die Empfangsqualität bei Knoten die an langen Stichleitungen angeschlossen sind schlechter. Somit müssen auch in diesem Fall zuerst die Knoten mit der besten Empfangsqualität überprüft werden.

Zudem können Knoten die örtlich sehr nahe zusammen sind durch Korrelation der Empfangsqualität der einzelnen Kommunikationsstrecken erkannt werden. Wenn also zwei Knoten zu denselben Knoten auf derselben maximalen Datenrate kommunizieren können, ist die Wahrscheinlichkeit hoch, dass diese Knoten örtlich nahe zusammen liegen. Damit kann in einer ersten Runde bei benachbarten Knoten nur einer überprüft werden, was tendenziell dazu führt, dass bei Knoten, die an derselben Stichleitung angeschlossen sind, nur einer überprüft wird und danach schneller eine weitere Stichleitung überprüft wird.

### Kombination mit empirisch theoretischen Verfahren

Insbesondere bei einem bekannten Verdrahtungsplan für das Kommunikations-Netzwerk kann mit Vorteil eine Kombination mit empirisch theoretischen Verfahren erfolgen.

Da die Einbrüche im Frequenzgang bei einer Frequenz liegen, welche umgekehrt proportional zur Leitungslänge ist und der Frequenzbereich durch die Datenrate < 1 MHz gegeben ist lassen sich empirisch Regeln aufstellen, wo Abschlüsse angebracht werden sollten.

Mit folgenden Regeln können in einem Netzwerk frequenzselektive Einbrüche von <1MHz vermieden werden:
- Pro Netzwerk muss mindestens 1 Abschluss-Impedanz vorhanden sein, dies kann auch der Quellenwiderstand des Senders sein.
- Jede Stichleitung >40m muss abgeschlossen sein.
- An Verzweigungen darf keine Abschluss-Impedanz eingefügt werden.
- Bei einem Bus oder Ast als Stichleitung muss nur der längste Signalpfad abgeschlossen werden, sofern dessen Gesamtlänge 40m überschreitet.

Damit Stichleitungen keine Einbrüche im Frequenzbereich <1 MHz (bis 500 kbit/s Manchester-codierte Datenrate) verursachen, müssen alle Punkte, die mehr als 40 m von der nächsten Verzweigung entfernt sind, abgeschlossen werden. Dadurch können keine Reflexionen entstehen, welche Einbrüche von <1 MHz zur Folge hätten. Für 1 Mbit/s müssten entsprechend Leitungen von mehr als 20 m abgeschlossen werden. Wenn die Stichleitung aus einem Bus oder Ast (Stichleitung mit mehreren Verzweigungen von >40m) bestehen, genügt es, den längsten Pfad abzuschliessen. Auch bei kleinen Netzwerken muss mindestens eine Abschluss-Impedanz vorhanden sein, damit es nicht zu Mehrfachreflexionen kommt, welche wiederum zu frequenzselektiven Einbrüchen führen. Der Quellenwiderstand (Seriewiderstand) des Senders kann unter Umständen auch als Abschluss-Impedanz dienen. Eine Verzweigung erscheint von sich aus schon niederohmig, womit das Einfügen eines zusätzlichen Abschlusswiderstandes an der Verzweigungsstelle zu einer noch kleineren Impedanz, d.h. zu einer schlechteren Anpassung führt und deshalb unterlassen werden sollte.

### Ablauf Speed Test (Geschwindigkeitstest)

Der Speed Test wird immer vom Master aus gestartet und hat folgenden Ablauf:

| **Kommando vom Master** | **Aktion der Knoten** | **Reaktion der Knoten** |
|---|---|---|
| Start Speed Test | Initialisiere interne Messtabelle, sende Acknowledge zum Master | - |
| Send Test Paket 50 kbps | Sende Testpaket mit 50 kbps | Speichere Empfangsqualität der empfangenen Testpakete |
| Send Test Paket 100 kbps | Sende Testpaket mit 100 kbps | Speichere Empfangsqualität der empfangenen Testpakete |
| Send Test Paket 250 kbps | Sende Testpaket mit 250 kbps | Speichere Empfangsqualität der empfangenen Testpakete |
| Send Test Paket 500 kbps | Sende Testpaket mit 500 kbps | Speichere Empfangsqualität der empfangenen Testpakete |
| Send Test Paket 1000 kbps | Sende Testpaket mit 1000 kbps | Speichere Empfangsqualität der empfangenen Testpakete |
| End Speed Test | Sende Messtabelle zum Master | - |

Mit dem "Start Speedtest"-Kommando initialisiert jeder Knoten seine jeweilige interne Messtabelle. Mit jedem "Send Test Paket" Kommando sendet jeder Knoten ein Testpaket auf der entsprechenden Datenrate und die anderen Knoten speichern die Empfangsqualität des Empfangenen Testpaketes in ihrer Messtabelle ab. Mit dem "End Speedtest" Kommando wird der Speed Test beendet und die Messtabellen zum Master gesendet.

Die Messtabelle, die jeder Knoten führt, beinhaltet beispielshaft N*S Felder von jeweils wenigen Byte. Dabei ist N die Anzahl Knoten im Netzwerk und S die Anzahl Speed Tests die durchgeführt werden. In jedem Feld wird die Empfangsqualität, auch LQI (Link Quality Indication) genannt, des jeweiligen Knotens bei der jeweiligen Datenrate abgespeichert.

Der Ablauf des Speedtest kann vom Master auch geändert werden, um nur einzelne oder auch andere Datenraten zu überprüfen.

Mit Vorteil wird für den Speed Test (Geschwindigkeitstest) ein Zeitschlitzverfahren (z.B. TDMA) verwendet.

Mit Vorteil wird das Verfahren durch einen als Master bezeichneten Knoten gesteuert. Als Master kann jeder NetzKnoten verwendet werden, der entsprechende Verarbeitungs-(z.B. ein Mikroprozessor mit entsprechender Software) und Speichermittel (z.B. Flashspeicher) umfasst. Mit Vorteil wird die Ausgangslage der Abschlusswiderstände bzw. Abschluss-Impedanzen nach der Installation der Knoten entsprechend dem gewählten Algorithmus wie folgt gewählt:
1) Alle Abschlüsse sind weggeschaltet. Es ist immer der Quellenwiderstand beim Sender vorhanden.
2) Alle Abschlüsse sind zugeschaltet. Es ist immer der Quellenwiderstand beim Sender vorhanden.
3) Die mit der empirisch theoretischen Methode gefundenen Abschlüsse sind gesetzt. Es ist immer der Quellenwiderstand beim Sender vorhanden.

Entsprechend wie in Figur 7 beschrieben führt der Master zuerst ein Inventory (Inventar; Erfassen der erreichbaren Knoten im Kommunikations-Netz) auf der tiefsten Datenrate durch um von möglichst vielen Knoten Antwort zu bekommen. Danach kommandiert der Master diesen Knoten ihre Abschluss-Impedanz zuzuschalten. Ein erneutes Inventory (Inventar) sollte nun alle Knoten sichtbar machen. Der Master führt nun einen der beiden Algorithmen aus, Add RLOAD (Zuschaltalgorithmus, siehe Figur 9) bzw. Remove RLOAD (Wegschaltalgorithmus, siehe Figur 8), wobei der Master den Knoten übermittelt, ob sie ihre Abschluss-Impedanz zu- oder abschalten müssen.

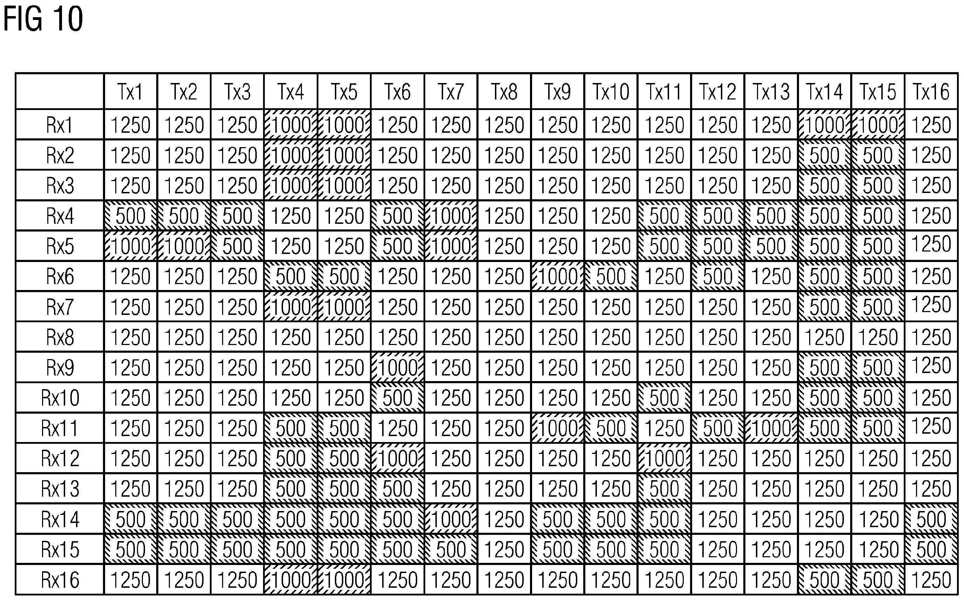

Für jede Stellungsvariante wird ein Speed Test (Geschwindigkeitstest) mit stufenweise höheren Datenraten durchgeführt. Dazu werden kurze Datenpakete mit Synchronisationsinformation und Parameter wie zum Beispiel ein zu verwendender TDMA Zeitschlitz und Datenrate an jeden Knoten gesendet. Jeder Knoten sendet darauf in seinem Zeitschlitz einen Datenblock mit einer Pseudo-Noise Sequenz. Jeder nicht sendende Knoten kann diesen Datenblock empfangen und auf seine Korrektheit und Empfangsqualität überprüfen. Jeder Knoten füllt darauf hin eine Tabelle aus mit den Ergebnissen aller empfangenen Datenblöcke die er von anderen Knoten erhalten hat. Sobald alle Datenraten überprüft wurden sammelt der Master alle diese Tabellen ein und fügt das Ganze zu einer Matrix zusammen (siehe Figur 10, oberer Abschnitt). Je nachdem ob die Geschwindigkeit im Netzwerk höher ausfällt als beim vorhergehenden Schritt, wird die zuletzt geschaltete Abschluss-Impedanz in seiner Position belassen oder nicht und die erreichte Geschwindigkeit nachgetragen oder nicht. Pro Iteration sind ein Inventory (Inventar), ein Geschwindigkeitstest und eine Konfiguration des Netzwerkes nötig.

Dies wird für jede Stellungsvariante der Abschluss-Impedanzen RLOAD wiederholt. Sind alle Iterationsschritte entsprechend den Verfahren gemäss Figur 8 bzw. Figur 9 abgearbeitet, so entscheidet zum Schluss der Master über die zu verwendende Datenrate. Diese kann entweder der kleinsten gemeinsamen Rate entsprechen, welche noch fehlerfrei für alle Knoten möglich war oder die Knoten dürfen individuell je nach ihrem Adressaten für ein zu übermittelndes Paket die für diese Verbindung ermittelte Geschwindigkeit einsetzen.

Mit Vorteil werden nur so viele Abschluss-Impadanzen gesetzt wie notwendig sind um eine Kommunikation zwischen allen Knoten im Netzwerk zu gewährleisten. Das Verfahren versucht dabei immer das Optimum zu finden.

Figur 10 zeigt eine beispielhafte Messtabelle mit Abschluss-Impedanzen. Die Messtabelle wird im Speicher von mindestens einem Netzwerk-Knoten, mit Vorteil im jeweiligen Master, gespeichert und verwaltet. Bei der Messtabelle gemäss Figur 10 handelt es sich beispielhaft um eine globale Messtabelle, die mit Vorteil alle Netzwerkknoten umfasst.

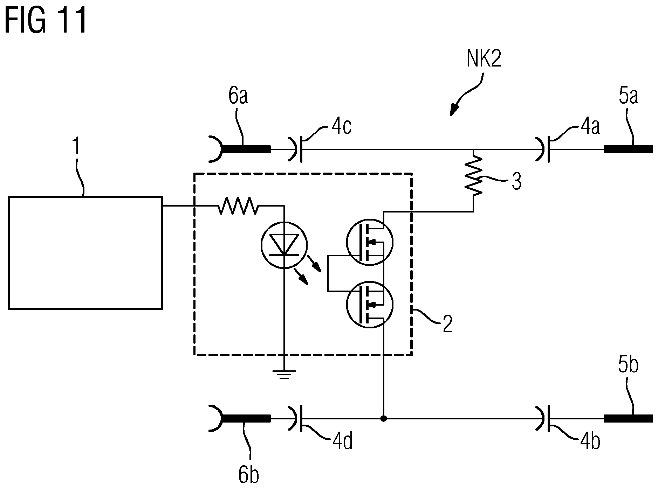

Figur 11 zeigt ein Blockdiagramm des Ausschnittes von einem dritten beispielhaften Netzwerk-Knoten NK12 welcher zum Zuschalten bzw. Wegschalten der optimalen Abschluss-Impedanz dient mit den oben beschriebenen Verfahren.

### Struktur des beispielhaften Netzwerk-Knoten NK12

Ein zu- und wegschaltbarer Widerstand 3 schliesst die zum Knoten führende Übertragungsleitung ab, welche an den Klemmen 5a, 5b angeschlossen ist. Beispielhaft wird in Figur 11 als Impedanz ein ohmscher Widerstand verwendet.

Der Mikroprozessor 1 im Knoten NK12 kann programmgesteuert das Zu- und Abschalten durch ein Logiksignal kommandieren. Dieses Logiksignal steuert ein potentialfreies Solid State Relais 2 bestehend aus LED und zwei NMOS FET mit lichtempfindlichen Gate. Im eingeschalteten Zustand ist der Widerstand 3 durch das Relais 2 zwischen den Leitungsadern zugeschaltet, die Leitung ist damit abgeschlossen mit dem Wert von Widerstand 2. Bei 100 Ohm Leitungsimpedanz beträgt der Wert von Widerstand 3 100 Ohm. In der Praxis haben die FET des Schalters 2 im eingeschalteten Zustand einen von Null verschiedenen Durchlasswiderstand, so dass der Wert von Widerstand 3 um diesen Anteil reduziert ausgeführt wird. Die Kondensatoren 4a, 4b, 4c, 4d dienen zur Abtrennung der Gleichspannungsanteile an den Klemmen 5a,5b zur symmetrischen Übertragungsleitung und an dem Klemmen 6a, 6b zum Empfänger.

Verfahren zur Optimierung der Übertragung von digitalen Daten in einem Zweidraht-Kommunikations-Netzwerk. Anordnungen, insbesondere Kommunikations-Netzwerk und Netzwerk-Knoten, zur Optimierung der Übertragung von digitalen Daten.

## Patentansprüche

1. Kommunikations-Netzwerk (KNW1 - KNW4) mit zwei oder mehr Netzwerk-Knoten (NK1 - NK12),
wobei ein Netzwerk-Knoten (NK1 - NK12) umfasst:
- eine Empfangsvorrichtung (EV), geeignet zum Empfangen von Signalen unterschiedlicher Datenraten, wobei die Empfangsvorrichtung (EV) ausgebildet ist, die Signalqualität von empfangenen Signalen festzustellen;
- eine Sendevorrichtung (SV), geeignet zum Senden von Signalen auf unterschiedlichen Datenraten;
- eine steuerbare Abschluss-Impedanz (3);
wobei ein Netzwerk-Knoten (NK1 - NK12) dazu ausgebildet ist, die festgestellte Signalqualität einem oder mehreren Netzwerk-Knoten zu übermitteln;
wobei mindestens ein Netzwerk-Knoten (NK1 - NK12) im Kommunikations-Netzwerk (KNW1 - KNW4) dazu ausgebildet ist, die festgestellten Signalqualitäten und die Werte der Abschluss-Impedanzen (3) der jeweiligen Netzwerk-Knoten (NK1 - NK12) zu erfassen;
wobei mindestens ein Netzwerk-Knoten (NK1 - NK12) den weiteren im Kommunikations-Netzwerk (KNW1 - KNW4) befindlichen Netzwerk-Knoten vorgibt, welchen jeweiligen Wert als Abschluss-Impedanz (3) diese einzustellen haben; und
wobei mindestens ein Netzwerk-Knoten (NK1 - NK12) Mittel umfasst, zur Bestimmung welche Abschluss-Impedanzen (3) die Netzwerk-Knoten (NK1 - NK12) jeweils einstellen sollen, um die Datenrate zwischen den Netzwerk-Knoten (NK1 - NK12) und die Signalqualität an den Empfangsvorrichtungen (EV) der Netzwerk-Knoten (NK1 - NK12) zu optimieren,
wobei die Netzwerk-Knoten (NK1 - NK12) eingerichtet sind, dass die Optimierung basierend auf einer von der Topologie des Kommunikations-Netzwerkes (KNW1 - KNW4) abhängigen empirischen Zuschaltung bzw. Wegschaltung von Abschluss-Impedanzen (3) für bestimmte Netzwerk-Knoten (NK1 - NK12) startet.

2. Netzwerk-Knoten in einem Kommunikations-Netzwerk (KNW1 - KNW4) mit mindestens zwei Netzwerk-Knoten (NK1 - NK12) und Zweidrahtverbindungen,
wobei der Netzwerk-Knoten (NK1 - NK12) umfasst:
- eine Empfangsvorrichtung (EV), geeignet zum Empfangen von Signalen unterschiedlicher Datenraten, wobei die Empfangsvorrichtung (EV) ausgebildet ist, die Signalqualität von empfangenen Signalen festzustellen;
- eine Sendevorrichtung (SV), geeignet zum Senden von Signalen auf unterschiedlichen Datenraten;
- eine steuerbare Abschluss-Impedanz (3);
- eine Messeinheit (MM) zum Feststellen der Signalqualität, welche an der Empfangsvorrichtung messbar ist;
- einen Speicher (M) zum Erfassen der Werte der Abschluss-Impedanzen (3) und der einem jeweiligen Wert zuordbaren Empfangsqualität für die Netzwerk-Knoten (NK1 - NK12) im Kommunikations-Netzwerk (KNW1 - KNW4);
- eine Steuereinheit (SM) zur Vorgabe eines Einstellwertes für die Abschluss-Impedanzen (3) der Netzwerk-Knoten (NK1 - NK12);
- eine Auswerte- und Berechnungseinheit (AM) zur Vorgabe von jeweiligen Einstellwerten für die Abschluss-Impedanzen (3) der Netzwerk-Knoten (NK1 - NK12) zur Erzielung einer optimalen Datenrate im Kommunikations-Netzwerk (KNW1 - KNW4), wobei die Auswertung und Berechnung basierend auf verschiedenen Datenraten erfolgt,
wobei der Netzwerk-Knoten (NK1 - NK12) eingerichtet ist, dass die Optimierung basierend auf einer von der Topologie des Kommunikations-Netzwerkes (KNW1 - KNW4) abhängigen empirischen Zuschaltung bzw. Wegschaltung von Abschluss-Impedanzen (3) für bestimmte Netzwerk-Knoten (NK1 - NK12) startet.

3. Anordnung nach einem der vorhergehenden Ansprüche, wobei das Kommunikations-Netzwerk (KNW1 - KNW4) eine freie Topologie aufweist.

4. Anordnung nach einem der vorhergehenden Ansprüche, wobei im Kommunikations-Netzwerk (KNW1 - KNW4) die Datenübertragung mittels Basisband-Modulation erfolgt.

5. Anordnung nach einem der vorhergehenden Ansprüche, wobei im Kommunikations-Netzwerk (KNW1 - KNW4) die Daten-Codierung mittels Manchester-Codierung erfolgt.

6. Anordnung nach einem der vorhergehenden Ansprüche, wobei die Abschluss-Impedanzen (3) der Netzwerk-Knoten (NK1 - NK12) abhängig von der Topologie des Kommunikations-Netzwerks (KNW1 - KNW4) und/oder des Übertragungsverfahrens und/oder der Kabellänge und/oder der Wellenimpedanz gewählt werden.

7. Anordnung nach einem der vorhergehenden Ansprüche, wobei die Netzwerk-Knoten (NK1 - NK12) über das Kommunikations-Netzwerk (KNW1 - KNW4) mit Energie versorgbar sind.

8. Anordnung nach einem der vorhergehenden Ansprüche, wobei ein Netzwerk-Knoten (NK1 - NK12) ausgebildet ist, einen oder mehrere andere Netzwerk-Knoten (NK1 - NK12) im Kommunikations-Netzwerk (KNW1 - KNW4) mit Energie zu versorgen.

9. Anordnung nach einem der vorhergehenden Ansprüche, wobei mindestens ein Netzwerk-Knoten (NK1 - NK12) ausgebildet ist, um aufgrund der Empfangsqualität der Netzwerk-Knoten (NK1 - NK12) die maximal mögliche Datenübertragungsrate im Kommunikations-Netzwerk (KNW1 - KNW4) zu ermitteln.

10. Anordnung nach einem der vorhergehenden Ansprüche, wobei mindestens ein Netzwerk-Knoten (NK1 - NK12) ausgebildet ist, um eine Verbindung zu einem oder mehreren weiteren Kommunikations-Netzwerken (KNW1 - KNW4) herzustellen.

11. Verfahren zur Optimierung der Übertragung von digitalen Daten in einem Zweidraht-Kommunikations-Netzwerk (KNW1 - KNW4), das Verfahren umfassend die folgenden Schritte:
Schritt 1: Analyse des Kommunikations-Netzwerkes (KNW1 - KNW4), bestehend aus Netzwerk-Knoten (NK1 - NK12) mit jeweils einer zu- oder abschaltbaren Abschluss-Impedanz (3, AI) und Zweidrahtleitungen zur Verbindung der Netzwerk-Knoten (NK1 - NK12), wobei für die Netzwerk-Knoten (NK1 - NK12) die Empfangsqualität bestimmt wird unter Beaufschlagung einer initialen Datenrate für jeden Netzwerk-Knoten (NK1 - NK12), bei Verwendung eines definierten Setups für die Abschluss-Impedanzen;
Schritt 2: unter Verwendung der initialen Datenrate für jeden Netzwerk-Knoten (NK1 - NK12) bestimmen, ob zur Erhöhung der jeweiligen Empfangsqualität eines Netzwerk-Knotens (NK1 - NK12) die jeweilige Abschluss-Impedanz (3) zu- oder abgeschaltet werden muss;
Schritt 3: Analyse des Kommunikations-Netzwerkes (KNW1 - KNW4), wobei für die Netzwerk-Knoten (NK1 - NK12) die Empfangsqualität bestimmt wird unter Beaufschlagung einer zweiten Datenrate für jeden Netzwerk-Knoten (NK1 - NK12);
Schritt 4: unter Verwendung der zweiten Datenrate für jeden Netzwerk-Knoten (NK1 - NK12) bestimmen, ob zur Erhöhung der Empfangsqualität die jeweilige Abschluss-Impedanz (3) zu- oder abgeschaltet werden muss;
Wiederholung von Schritt 3 und 4 solange, bis keine Verbesserung der Empfangsqualität messbar ist,
wobei das Verfahren basierend auf einer von der Topologie des Kommunikations-Netzwerkes (KNW1 - KNW4) abhängigen empirischen Zuschaltung bzw. Wegschaltung von Abschluss-Impedanzen (3) für bestimmte Netzwerk-Knoten (NK1 - NK12) startet.

12. Verfahren nach Anspruch 11, wobei im Betrieb erkannt wird, ob im Kommunikations-Netzwerk (KNW1 - KNW4) ein neuer Netzwerk-Knoten (NK1 - NK12) zugeschaltet wird oder ein vorhandener Netzwerk-Knoten (NK1 - NK12) abgeschaltet wird oder ob eine neue Verbindung angeschlossen wird oder ob eine vorhandene Verbindung entfernt wird.

13. Verfahren nach Anspruch 12, wobei nach dem Erkennen einer Veränderung das Kommunikations-Netzwerk (KNW1 - KNW4) erneut bezüglich der Empfangsqualität und/oder der Datenrate optimiert wird.

14. Verfahren nach einem der Ansprüche 11 bis 13, wobei in den Schritten 3 und 4 die zweite Datenrate ausgehend von der initialen Datenrate durch eine schrittweise Erhöhung der Datenrate bestimmt wird.

15. Verfahren nach einem der Ansprüche 11 bis 14, wobei als initiale Datenrate 50kBit/s verwendet wird.

16. Verfahren nach einem der Ansprüche 11 bis 13, wobei in den Schritten 3 und 4 die zweite Datenrate ausgehend von der initialen Datenrate durch eine schrittweise Reduzierung der Datenrate bestimmt wird.

17. Verfahren nach einem der Ansprüche 11 bis 13 oder nach Anspruch 16, wobei als initiale Datenrate 1 MBit/s verwendet wird.

18. Verfahren nach einem der Ansprüche 11 bis 17, wobei in Schritt 1 alle Abschluss-Impedanzen entweder weggeschaltet oder zugeschaltet sind.

19. Verfahren nach einem der Ansprüche 11 bis 18, wobei der Wert der Abschluss-Impedanz an die Wellen-Impedanz des Netzwerkes angepasst ist.

20. Verfahren nach einem der Ansprüche 11 bis 19, wobei der Wert der Abschluss-Impedanz (3) im Bereich von 100 Ohm liegt.

21. Verfahren nach einem der Ansprüche 11 bis 20, wobei der Wert der Abschluss-Impedanz (3) variabel ist.

22. Verfahren nach einem der Ansprüche 11 bis 21, wobei die Bestimmung, welche Abschluss-Impedanzen (3) zur Erhöhung der Empfangsqualität zu- bzw. weggeschaltet werden müssen, durch ein mathematisches Optimierungsverfahren erfolgt.

23. Verfahren nach einem der Ansprüche 11 bis 22, wobei das Verfahren auf jeden Netzwerk-Knoten (NK1 - NK12) angewendet wird.

24. Verfahren nach einem der Ansprüche 11 bis 23, wobei das Verfahren parallel zum Datenbetrieb abläuft.

## Claims

1. Communication network (KNW1 - KNW4) having two or more network nodes (NK1 - NK12),
wherein a network node (NK1 - NK12) comprises:
- a reception apparatus (EV), suitable for receiving signals at different data rates, wherein the reception apparatus (EV) is designed to discern the signal quality of received signals;
- a transmission apparatus (SV), suitable for sending signals at different data rates;
- a controllable terminating impedance (3);
wherein a network node (NK1 - NK12) is designed to transmit the discerned signal quality to one or more network nodes;
wherein at least one network node (NK1 - NK12) in the communication network (KNW1 - KNW4) is designed to record the discerned signal qualities and the values of the terminating impedances (3) of the respective network nodes (NK1 - NK12);
wherein at least one network node (NK1 - NK12) prescribes for the further network nodes in the communication network (KNW1 - KNW4) what respective value they need to set as a terminating impedance (3); and
wherein at least one network node (NK1 - NK12) comprises means for determining what terminating impedances (3) the network nodes (NK1 - NK12) are intended to set in each case in order to optimize the data rate between the network nodes (NK1 - NK12) and the signal quality at the reception apparatuses (EV) of the network nodes (NK1 - NK12),
wherein the network nodes (NK1 - NK12) are set up that the optimization starts based on empirical connection and disconnection of terminating impedances (3) for determined network nodes (NK1 - NK12) that is dependent on the topology of the communication network (KNW1 - KNW4).

2. Network node in a communication network (KNW1 - KNW4) having at least two network nodes (NK1 - NK12) and two-wire connections,
wherein the network node (NK1 - NK12) comprises:
- a reception apparatus (EV), suitable for receiving signals at different data rates, wherein the reception apparatus (EV) is designed to discern the signal quality of received signals;
- a transmission apparatus (SV), suitable for sending signals at different data rates;
- a controllable terminating impedance (3);
- a measuring unit (MM) for discerning the signal quality measurable at the reception apparatus;
- a memory (M) for recording the values of the terminating impedances (3) and the reception quality, associable with a respective value, for the network nodes (NK1 - NK12) in the communication network (KNW1 - KNW4);
- a control unit (SM) for prescribing a setting value for the terminating impedances (3) of the network nodes (NK1 - NK12);
- an evaluation and computation unit (AM) for prescribing respective setting values for the terminating impedances (3) of the network nodes (NK1 - NK12) in order to attain an optimum data rate in the communication network (KNW1 - KNW4), wherein the evaluation and computation are effected based on different data rates,
wherein the network node (NK1 - NK12) is set up that the optimization starts based on empirical connection and disconnection of terminating impedances (3) for determined network nodes (NK1 - NK12) that is dependent on the topology of the communication network (KNW1 - KNW4).

3. Arrangement according to either of the preceding claims, wherein the communication network (KNW1 - KNW4) has a free topology.

4. Arrangement according to one of the preceding claims, wherein the data transmission in the communication network (KNW1 - KNW4) is effected by means of baseband modulation.

5. Arrangement according to one of the preceding claims, wherein the data encoding in the communication network (KNW1 - KNW4) is effected by means of Manchester encoding.

6. Arrangement according to one of the preceding claims, wherein the terminating impedances (3) of the network nodes (NK1 - NK12) are chosen on the basis of the topology of the communication network (KNW1 - KNW4) and/or of the transmission method and/or of the cable length and/or of the characteristic impedance.

7. Arrangement according to one of the preceding claims, wherein the network nodes (NK1 - NK12) are supplyable with power via the communication network (KNW1 - KNW4).

8. Arrangement according to one of the preceding claims, wherein a network node (NK1 - NK12) is designed to supply one or more other network nodes (NK1 - NK12) in the communication network (KNW1 - KNW4) with power.

9. Arrangement according to one of the preceding claims, wherein at least one network node (NK1 - NK12) is designed to take the reception quality of the network nodes (NK1 - NK12) as a basis for ascertaining the maximum possible data transmission rate in the communication network (KNW1 - KNW4).

10. Arrangement according to one of the preceding claims, wherein at least one network node (NK1 - NK12) is designed to set up a connection to one or more further communication networks (KNW1 - KNW4).

11. Method for optimizing the transmission of digital data in a two-wire communication network (KNW1 - KNW4), the method comprising the following steps:
step 1: analysis of the communication network (KNW1 - KNW4), consisting of network nodes (NK1 - NK12) having a respective connectable or disconnectable terminating impedance (3, AI) and two-wire lines for connecting the network nodes (NK1 - NK12), wherein the reception quality for the network nodes (NK1 - NK12) is determined by applying an initial data rate for each network node (NK1 - NK12), when a defined setup for the terminating impedances is used;
step 2: by using the initial data rate for each network node (NK1 - NK12), determining whether the respective terminating impedance (3) needs to be connected or disconnected in order to increase the respective reception quality of a network node (NK1 - NK12);
step 3: analysis of the communication network (KNW1 - KNW4), wherein the reception quality for the network nodes (NK1 - NK12) is determined by applying a second data rate for each network node (NK1 - NK12);
step 4: by using the second data rate for each network node (NK1 - NK12), determining whether the respective terminating impedance (3) needs to be connected or disconnected in order to increase the reception quality; repetition of steps 3 and 4 until there is no measurable improvement in the reception quality, wherein the method starts based on empirical connection and disconnection of terminating impedances (3) for determined network nodes (NK1 - NK12) that is dependent on the topology of the communication network (KNW1 - KNW4).

12. Method according to Claim 11, wherein during operation it is identified whether a new network node (NK1 - NK12) is connected in the communication network (KNW1 - KNW4) or an existing network node (NK1 - NK12) is disconnected or whether a new connection is connected or whether an existing connection is removed.

13. Method according to Claim 12, wherein following the identification of an alteration the communication network (KNW1 - KNW4) is reoptimized for reception quality and/or data rate.

14. Method according to one of Claims 11 to 13, wherein in steps 3 and 4, the second data rate is determined from the initial data rate by increasing the data rate in steps.

15. Method according to one of Claims 11 to 14, wherein the initial data rate used is 50 kbit/s.

16. Method according to one of Claims 11 to 13, wherein in steps 3 and 4 the second data rate is determined from the initial data rate by reducing the data rate in steps.

17. Method according to one of Claims 11 to 13 or according to Claim 16, wherein the initial data rate used is 1 Mbit/s.

18. Method according to one of Claims 11 to 17, wherein in step 1 all terminating impedances are either disconnected or connected.

19. Method according to one of Claims 11 to 18, wherein the value of the terminating impedance matches the characteristic impedance of the network.

20. Method according to one of Claims 11 to 19, wherein the value of the terminating impedance (3) is in the region of 100 ohms.

21. Method according to one of Claims 11 to 20, wherein the value of the terminating impedance (3) is variable.

22. Method according to one of Claims 11 to 21, wherein the determination of what terminating impedances (3) need to be connected and disconnected in order to increase the reception quality is effected using a mathematical optimization method.

23. Method according to one of Claims 11 to 22, wherein the method is applied to each network node (NK1 - NK12).

24. Method according to one of Claims 11 to 23, wherein the method takes place in parallel with the data mode.

## Revendications

1. Réseau de communication (KNW1 - KNW4) avec deux nœuds de réseau (NK1 - NK12) ou plus, un nœud de réseau (NK1 - NK12) comprenant :
- un dispositif de réception (EV) adapté pour recevoir des signaux de différents débits de données, le dispositif de réception (EV) étant conçu pour constater la qualité de signal de signaux reçus ;
- un dispositif d'émission (SV) adapté pour émettre des signaux sur différents débits de données ;
- une impédance terminale commandable (3) ;
un nœud de réseau (NK1 - NK12) étant conçu pour transmettre la qualité de signal constatée à un ou plusieurs nœuds de réseau ;
au moins un nœud de réseau (NK1 - NK12) du réseau de communication (KNW1 - KNW4) étant conçu pour saisir les qualités de signal constatées et les valeurs des impédances terminales (3) des nœuds de réseau respectifs (NK1 - NK12) ;
au moins un nœud de réseau (NK1 - NK12) spécifiant aux autres nœuds de réseau situés dans le réseau de communication (KNW1 - KNW4) quelle valeur respective ceux-ci doivent prendre comme impédance terminale (3) et
au moins un nœud de réseau (NK1 - NK12) comprenant des moyens pour déterminer les impédances terminales (3) que les nœuds de réseau (NK1 - NK12) doivent respectivement paramétrer pour optimiser le débit de données entre les nœuds de réseau (NK1 - NK12) et la qualité de signal au niveau des dispositifs de réception (EV) des nœuds de réseau (NK1 - NK12),
les nœuds de réseau (NK1 - NK12) étant configurés pour que l'optimisation commence sur la base d'une connexion resp. coupure empiriques, pour certains nœuds de réseau (NK1 - NK12), d'impédances terminales (3) en fonction de la topologie du réseau de communication (KNW1 - KNW4).

2. Nœud de réseau dans un réseau de communication (KNW1 - KNW4) comportant au moins deux nœuds de réseau (NK1 - NK12) et des liaisons bifilaires,
le nœud de réseau (NK1 - NK12) comprenant :
- un dispositif de réception (EV) adapté pour recevoir des signaux de différents débits de données, le dispositif de réception (EV) étant conçu pour constater la qualité de signal de signaux reçus ;
- un dispositif d'émission (SV) adapté pour émettre des signaux sur différents débits de données ;
- une impédance terminale commandable (3) ;
- une unité de mesure (MM) pour constater la qualité de signal mesurable au niveau du dispositif de réception ;
- une mémoire (M) pour saisir les valeurs des impédances terminales (3) et la qualité de réception associable à une valeur respective pour les nœuds de réseau (NK1 - NK12) du réseau de communication (KNW1 - KNW4) ;
- une unité de commande (SM) pour la spécification d'une valeur de paramétrage pour les impédances terminales (3) des nœuds de réseau (NK1 - NK12) ;
- une unité d'évaluation et de calcul (AM) pour la spécification de valeurs de paramétrage respectives pour les impédances terminales (3) des nœuds de réseau (NK1 - NK12) pour obtenir un débit de données optimal dans le réseau de communication (KNW1 - KNW4),
l'évaluation et le calcul se faisant sur la base de différents débits de données,
le nœud de réseau (NK1 - NK12) étant configuré pour que l'optimisation commence sur la base d'une connexion resp. coupure empiriques, pour certains nœuds de réseau (NK1 - NK12), d'impédances terminales (3) en fonction de la topologie du réseau de communication (KNW1 - KNW4).

3. Agencement selon l'une des revendications précédentes, le réseau de communication (KNW1 - KNW4) présentant une topologie libre.

4. Agencement selon l'une des revendications précédentes, la transmission de données dans le réseau de communication (KNW1 - KNW4) se faisant au moyen d'une modulation en bande de base.

5. Agencement selon l'une des revendications précédentes, le codage de données dans le réseau de communication (KNW1 - KNW4) se faisant au moyen du codage de Manchester.

6. Agencement selon l'une des revendications précédentes, les impédances terminales (3) des nœuds de réseau (NK1 - NK12) étant choisies en fonction de la topologie du réseau de communication (KNW1 - KNW4) et/ou du procédé de transmission et/ou de la longueur de câble et/ou de l'impédance d'onde.

7. Agencement selon l'une des revendications précédentes, les nœuds de réseau (NK1 - NK12) pouvant être alimentés en énergie via le réseau de communication (KNW1 - KNW4).

8. Agencement selon l'une des revendications précédentes, un nœud de réseau (NK1 - NK12) étant conçu pour alimenter en énergie un ou plusieurs autres nœuds de réseau (NK1 - NK12) du réseau de communication (KNW1 - KNW4).

9. Agencement selon l'une des revendications précédentes, au moins un nœud de réseau (NK1 - NK12) étant conçu pour déterminer, sur la base de la qualité de réception des nœuds de réseau (NK1 - NK12), le débit de transmission de données maximal possible dans le réseau de communication (KNW1 - KNW4).

10. Agencement selon l'une des revendications précédentes, au moins un nœud de réseau (NK1 - NK12) étant conçu pour établir une liaison vers un ou plusieurs autres réseaux de communication (KNW1 - KNW4).

11. Procédé pour optimiser la transmission de données numériques dans un réseau de communication bifilaire (KNW1 - KNW4), le procédé comprenant les étapes suivantes :
étape 1 : analyse du réseau de communication (KNW1 - KNW4) composé de nœuds de réseau (NK1 - NK12) avec respectivement une impédance terminale (3, AI) pouvant être connectée ou coupée et des lignes bifilaires pour relier les nœuds de réseau (NK1 - NK12), la qualité de réception étant déterminée, pour les nœuds de réseau (NK1 - NK12), en appliquant un débit de données initial pour chaque nœud de réseau (NK1 - NK12), avec utilisation d'un setup défini pour les impédances terminales ;
étape 2 : déterminer, en utilisant le débit de données initial, pour chaque nœud de réseau (NK1 - NK12), s'il faut, pour augmenter la qualité de réception respective d'un nœud de réseau (NK1 - NK12), connecter ou couper l'impédance terminale respective (3) ;
étape 3 : analyse du réseau de communication (KNW1 - KNW4), la qualité de réception étant déterminée, pour les nœuds de réseau (NK1 - NK12), en appliquant un deuxième débit de données pour chaque nœud de réseau (NK1 - NK12) ;
étape 4 : déterminer, en utilisant le deuxième débit de données, pour chaque nœud de réseau (NK1 - NK12), s'il faut, pour augmenter la qualité de réception, connecter ou couper l'impédance terminale respective (3) ; répéter les étapes 3 et 4 jusqu'à ce qu'aucune amélioration de la qualité de réception ne puisse être mesurée,
le procédé commençant sur la base d'une connexion resp. coupure empiriques, pour certains nœuds de réseau (NK1 - NK12), d'impédances terminales (3) en fonction de la topologie du réseau de communication (KNW1 - KNW4).

12. Procédé selon la revendication 11, dans lequel il est reconnu, pendant le fonctionnement, si, dans le réseau de communication (KNW1 - KNW4), un nouveau nœud de réseau (NK1 - NK12) est connecté ou un nœud de réseau existant (NK1 - NK12) est coupé ou si une nouvelle liaison est connectée ou si une liaison existante est supprimée.

13. Procédé selon la revendication 12, le réseau de communication (KNW1 - KNW4) étant, après qu'une modification a été identifiée, de nouveau optimisé en termes de qualité de réception et/ou de débit de données.

14. Procédé selon l'une des revendications 11 à 13, le deuxième débit de données étant, aux étapes 3 et 4, déterminé sur la base du débit de données initial par augmentation progressive du débit de données.

15. Procédé selon l'une des revendications 11 à 14, dans lequel on utilise 50kBit/s en tant que débit de données initial.

16. Procédé selon l'une des revendications 11 à 13, le deuxième débit de données étant, aux étapes 3 et 4, déterminé sur la base du débit de données initial par réduction progressive du débit de données.

17. Procédé selon l'une des revendications 11 à 13 ou selon la revendication 16, dans lequel on utilise 1 Mbit/s en tant que débit de données initial.

18. Procédé selon l'une des revendications 11 à 17, toutes les impédances terminales étant, à l'étape 1, soit coupées soit connectées.

19. Procédé selon l'une des revendications 11 à 18, la valeur de l'impédance terminale étant adaptée à l'impédance d'onde du réseau.

20. Procédé selon l'une des revendications 11 à 19, la valeur de l'impédance terminale (3) étant de l'ordre de 100 ohms.

21. Procédé selon l'une des revendications 11 à 20, la valeur de l'impédance terminale (3) étant variable.

22. Procédé selon l'une des revendications 11 à 21, la détermination des impédances terminales (3) à connecter resp. à couper pour augmenter la qualité de réception se faisant au moyen d'un procédé d'optimisation mathématique.

23. Procédé selon l'une des revendications 11 à 22, le procédé étant appliqué à chaque nœud de réseau (NK1 - NK12).

24. Procédé selon l'une des revendications 11 à 23, le procédé se déroulant parallèlement à l'exploitation de données.
